# EUROPEAN PATENT APPLICATION

(11) **EP 4 043 090 A1**
(43) Date of publication of application: **17.08.2022**
(21) Application number: 21814528.2
(22) Date of filing: 02.04.2021
(51) Int. Cl.: B01D 53/50, F01N 3/04, B63H 21/32, B63H 21/38

(54) **EXHAUST GAS TREATMENT DEVICE FOR SHIPS**

(30) Priority: 27.05.2020 JP 2020092723
(71) Applicant: Fuji Electric Co., Ltd., Kawasaki-shi, Kanagawa 210-9530 (JP)
(72) Inventor: TAKAHASHI, Kuniyuki, Kawasaki-shi, Kanagawa 210-9530 (JP); UI, Shinya, Kawasaki-shi, Kanagawa 210-9530 (JP); KISHI, Kunihiko, Kawasaki-shi, Kanagawa 210-9530 (JP)
(74) Representative: MERH-IP Matias Erny Reichl Hoffmann Patentanwälte PartG mbB
(86) International application number: PCT/JP2021/014293
(87) International publication number: WO 2021/240997

(57) **Abstract**

Provided is an exhaust gas treatment apparatus for ships comprising: a reaction tower provided in the ship and to which exhaust gas is introduced; a first pump configured to introduce, into the reaction tower, liquid for treating the exhaust gas; a controlling unit configured to control an output of the first pump; and a draft acquiring unit configured to acquire a draft of the ship, wherein the controlling unit is configured to control the output of the first pump based on the draft of the ship acquired by the draft acquiring unit.

## Description

### BACKGROUND

### 1. TECHNICAL FIELD

The present invention relates to an exhaust gas treatment apparatus for ships.

### 2. RELATED ART

Conventionally, an exhaust gas treatment apparatus which is configured to control a volumetric flow rate of liquid for treating exhaust gas is known (for example, see Patent Documents 1-4).
Patent Document 1: Japanese Patent No. 5958563
Patent Document 2: Japanese Patent No. 5939366
Patent Document 3: Japanese Patent No. 5979269
Patent Document 4: Japanese Patent No. 5999228

### TECHNICAL PROBLEM

In an exhaust gas treatment apparatus for ships, it is preferred to control a volumetric flow rate of liquid for treating the exhaust gas according to a draft of the ship.

### GENERAL DISCLOSURE

In the first aspect of the present invention, provided is an exhaust gas treatment apparatus for ships. An exhaust gas treatment apparatus for ships includes: a reaction tower which is provided in a ship, to which exhaust gas is introduced; a first pump configured to introduce, to the reaction tower, liquid for treating the exhaust gas; a controlling unit configured to control an output of the first pump; and a draft acquiring unit configured to acquire a draft of the ship. The controlling unit controls the output of the first pump based on the draft of the ship acquired by the draft acquiring unit.

The draft acquiring unit may acquire a first draft of the ship at a first clock time, and may acquire a second draft of the ship at a second clock time which is later than the first clock time. The controlling unit may control the output of the first pump to be a first output when the draft of the ship is the first draft, and may control the output of the first pump to be a second output which is different from the first output when the draft of the ship is the second draft.

The controlling unit may control the second output to be less than the first output when the second draft is higher than the first draft.

The exhaust gas treatment apparatus for ships may further include a pressure measurement unit configured to measure at least one of a suction pressure of liquid introduced into the first pump and a discharge pressure of the liquid derived from the first pump. The draft acquiring unit may acquire the draft of the ship based on at least one of the suction pressure and the discharge pressure measured by the pressure measurement unit.

The exhaust gas treatment apparatus for ships may further include a draft sensor configured to sense a location of a water surface in the ship. The draft acquiring unit may acquire the draft of the ship based on the location of the water surface sensed by the draft sensor.

The controlling unit may stepwisely control the output of the first pump.

When the draft of the ship is less than a predetermined draft threshold, the controlling unit may control the output of the first pump to be a constant predetermined output.

The reaction tower may have a plurality of ejecting units configured to eject the liquid. In the vertical direction, a location of one of the plurality of ejecting units and a location of another one of the plurality of ejecting units may be different from each other. The controlling unit may control an amount of liquid ejected by one of the plurality of ejecting units and an amount of liquid ejected by another one of the plurality of ejecting units based on the draft of the ship.

The exhaust gas treatment apparatus for ships includes: a reaction tower which is provided in the ship, to which exhaust gas is introduced, and has a plurality of ejecting units configured to eject liquid for treating the exhaust gas; a draft acquiring unit configured to acquire a draft of the ship; and a controlling unit configured to control an amount of the liquid ejected by the ejecting unit. In the vertical direction, a location of one of the plurality of ejecting units and a location of another one of the plurality of ejecting units are different from each other. The controlling unit may control an amount of the liquid ejected by one of the plurality of ejecting units and an amount of the liquid ejected by another one of the plurality of ejecting units based on the draft of the ship which is acquired by the draft acquiring unit.

The exhaust gas treatment apparatus for ships may further include: a spray unit configured to spray exhaust liquid generated by treating the exhaust gas on exhaust gas introduced into the reaction tower; and a second pump configured to supply the exhaust liquid to the spray unit. The controlling unit may control an output of the second pump.

The second pump may be provided, in the vertical direction, between a lowest draft which is the lowest draft of the ship and a highest draft which is the highest draft of the ship.

In the vertical direction, when a location of the second pump is the same as the location of the water surface in the ship or lower than the location of the water surface, the controlling unit may control the output of the second pump.

The exhaust gas treatment apparatus for ships may further include a third pump configured to: introduce liquid into the reaction tower; or cause the exhaust liquid to be discharged from the reaction tower, the exhaust liquid being generated by treating the exhaust gas. The controlling unit may control whether to introduce the liquid into the reaction tower by the third pump based on the draft of the ship, or to cause the third pump to discharge the exhaust liquid from the reaction tower.

In the vertical direction, the third pump may be located above the location of the water surface in the ship in a case of a lowest draft which is the lowest draft on the ship, and may be located below the location of the water surface in the ship in a case of a highest draft which is the highest draft of the ship.

In the vertical direction, when a location of the third pump is lower than the location of the water surface in the ship, the controlling unit may cause the third pump to discharge the exhaust liquid to the reaction tower. In the vertical direction, when the location of the third pump is the same as the location of the water surface in the ship or higher than the location of the water surface, the controlling unit may cause the third pump to introduce the liquid to the reaction tower.

The controlling unit may control an output of the third pump based on the draft of the ship.

The summary clause does not necessarily describe all necessary features of the embodiments of the present invention. The present invention may also be a subcombination of the features described above.

### BRIEF DESCRIPTION OF THE DRAWINGS

Fig. 1 shows one example of a ship 200 according to one embodiment of the present invention.
Fig. 2A shows one example of an exhaust gas treatment apparatus for ships 100 according to one embodiment of the present invention.
Fig. 2B shows another example of the exhaust gas treatment apparatus for ships 100 according to one embodiment of the present invention.
Fig. 3 shows one example of the exhaust gas treatment apparatus for ships 100 according to one embodiment of the present invention.
Fig. 4 shows one example of the exhaust gas treatment apparatus for ships 100 according to one embodiment of the present invention.
Fig. 5 shows a relationship between a pump head H of a first pump 60 and a supply amount Q of liquid 40 per unit time supplied from the first pump 60.
Fig. 6 shows a relationship between a frequency f of an electric motor configured to drive the first pump 60 and the supply amount Q of the liquid 40 per unit time supplied from the first pump 60.
Fig. 7A shows another example of the exhaust gas treatment apparatus for ships 100 according to one embodiment of the present invention.
Fig. 7B shows another example of the exhaust gas treatment apparatus for ships 100 according to one embodiment of the present invention.
Fig. 8A shows another example of the exhaust gas treatment apparatus for ships 100 according to one embodiment of the present invention.
Fig. 8B shows another example of the exhaust gas treatment apparatus for ships 100 according to one embodiment of the present invention.
Fig. 9 shows one example of a relationship between a time t and a draft d of the ship 200.
Fig. 10 shows another example of the exhaust gas treatment apparatus for ships 100 according to one embodiment of the present invention.
Fig. 11 shows one example of a relationship between an output P of the first pump 60 and a draft d of the ship 200.
Fig. 12 shows one example of a relationship between an output P of the first pump 60 and a volumetric flow rate Q' of the liquid 40 introduced per unit time into the reaction tower 10.
Fig. 13A shows another figure in one example of the exhaust gas treatment apparatus for ships 100 shown in Fig. 2A.
Fig. 13B shows another figure in one example of the exhaust gas treatment apparatus for ships 100 shown in Fig. 2A.
Fig. 14A shows another figure in one example of the exhaust gas treatment apparatus for ships 100 shown in Fig. 2B.
Fig. 14B shows another figure in one example of the exhaust gas treatment apparatus for ships 100 shown in Fig. 2B.
Fig. 15 shows another example of the exhaust gas treatment apparatus for ships 100 according to one embodiment of the present invention.
Fig. 16 shows a positional relationship between a draft d and a second pump 62 in the case in which the draft d of the ship 200 in the exhaust gas treatment apparatus for ships 100 shown in Fig. 15 is a first draft d1.
Fig. 17 shows a positional relationship between a draft d and a second pump 62 in the case in which the draft d of the ship 200 in the exhaust gas treatment apparatus for ships 100 shown in Fig. 15 is a second draft d2.
Fig. 18 shows a relationship between a location of a second pump 62 in the vertical direction and a draft d.
Fig. 19 shows another example of the exhaust gas treatment apparatus for ships 100 according to one embodiment of the present invention.
Fig. 20 shows a relationship between a location of a third pump 64 in the vertical direction and a draft d.

### DESCRIPTION OF EXEMPLARY EMBODIMENTS

Hereinafter, the invention will be described through embodiments of the invention, but the following embodiments do not limit the invention according to claims. In addition, not all combinations of features described in the embodiments are essential to the solution of the invention.

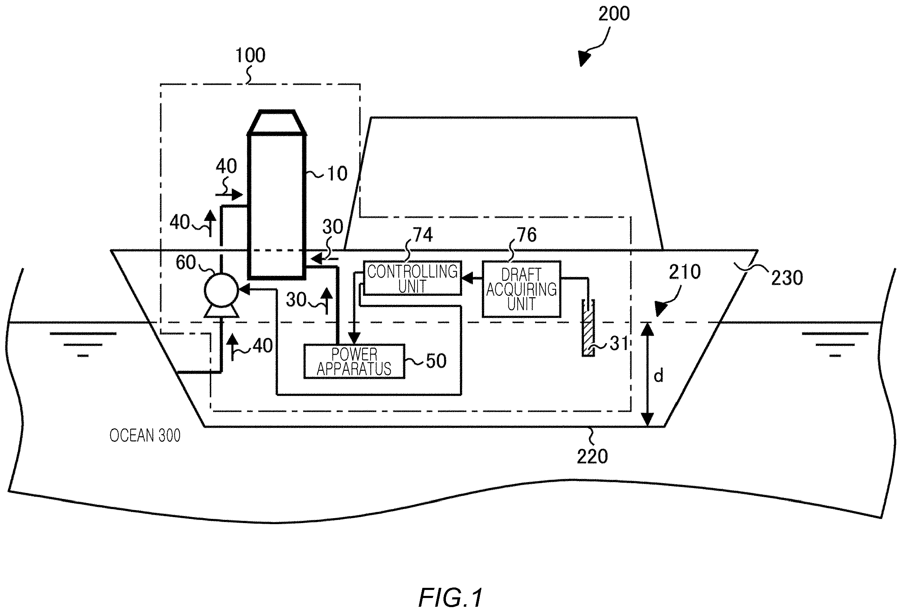

Fig. 1 shows one example of a ship 200 according to one embodiment of the present invention. The ship 200 of the present example includes an exhaust gas treatment apparatus for ships 100. In Fig. 1, a range of the exhaust gas treatment apparatus for ships 100 is shown by dashed-dotted lines. In the present example, the ship 200 is navigating the ocean 300.

The exhaust gas treatment apparatus for ships 100 includes a reaction tower 10, a first pump 60, a controlling unit 74, and a draft acquiring unit 76. The exhaust gas treatment apparatus for ships 100 may include a power apparatus 50. The power apparatus 50 is, for example, an engine, a boiler, or the like. The power apparatus 50 discharges exhaust gas 30. The exhaust gas 30 includes harmful substances such as sulfur oxide (SOₓ), nitrogen oxide (NOₓ), or the like.

The reaction tower 10 is provided in the ship 200. The exhaust gas 30 is introduced into the reaction tower 10. The first pump 60 introduces liquid 40 for treating the exhaust gas 30 into the reaction tower 10. The liquid 40 may be sea water. The liquid 40 may be alkaline liquid. In the present example, the liquid 40 treats the exhaust gas 30 within the reaction tower 10. Treating the exhaust gas 30 means removing the harmful substances included in the exhaust gas 30.

The controlling unit 74 controls an output of the first pump 60. The output of the first pump 60 may be a rotation speed per unit time of an electric motor driving the first pump 60, or may be a frequency of the electric motor. The controlling unit 74 may control a volumetric flow rate of the liquid 40 introduced into the reaction tower 10 by controlling the output of the first pump 60. The volumetric flow rate of the liquid 40 introduced into the reaction tower 10 may be an amount of the liquid 40 introduced per unit time into the reaction tower 10.

The draft acquiring unit 76 acquires a draft d of the ship 200. The draft d of the ship 200 is a height from a ship bottom 220 of the ship 200 to a water surface 210. In Fig. 1, the draft d of the ship 200 is shown by a double-headed arrow. In the present example, the water surface 210 is a sea level of the ocean 300.

The exhaust gas treatment apparatus for ships 100 may further include a draft sensor 31. The draft sensor 31 may be provided in a ship hull 230 of the ship 200. The draft sensor 31 senses a location of the water surface 210 in the ship 200. In the present example, the draft acquiring unit 76 acquires the draft of the ship 200 based on the location of the water surface 210 (in the present example, a sea level) sensed by the draft sensor 31.

The controlling unit 74 controls the output of the first pump 60 based on the draft d of the ship 200. The draft d of the ship 200 is likely to be changed according to a mass of a payload or the like of the ship 200. When the draft d of the ship 200 is changed, the output of the first pump 60 which is required for introducing the liquid 40 into the reaction tower 10 is likely to be changed. In the exhaust gas treatment apparatus for ships 100 of the present example, since the controlling unit 74 controls the output of the first pump 60 based on the draft d of the ship 200, the controlling unit 74 can control the output of the first pump 60 to be an optimal output according to the draft d. It should be noted that, when the draft d of the ship 200 changes according to the mass of the payload or the like of the ship 200, the controlling unit 74 may control the output of the first pump 60 based on the mass of the payload of the ship 200.

The controlling unit 74 may control the power of the power apparatus 50 based on the draft d of the ship 200. The draft d in the case in which the ship 200 is loaded with the payload or the like is likely to be higher than the draft d in the case in which the ship 200 is not loaded with the payload or the like. The higher the draft d of the ship 200, the more likely the resistance force the ship hull 230 receives from the ocean 300 being increased. Therefore, the controlling unit 74 may control the power of the power apparatus 50 to be increased as the draft d increases.

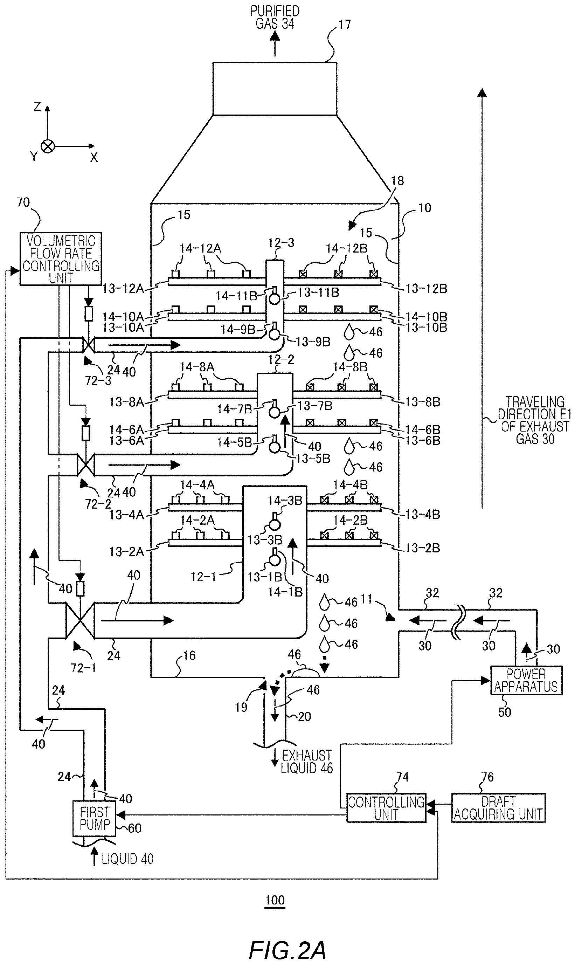

Fig. 2A shows one example of an exhaust gas treatment apparatus for ships 100 according to one embodiment of the present invention. The exhaust gas treatment apparatus for ships 100 may further include an exhaust gas introduction tube 32 and a liquid introduction tube 24.

The exhaust gas introduction tube 32 connects the power apparatus 50 and the reaction tower 10. In the present example, the exhaust gas 30 discharged from the power apparatus 50 is introduced into the reaction tower 10 after passing through the exhaust gas introduction tube 32. The liquid introduction tube 24 connects the first pump 60 and the reaction tower 10. In the present example, the liquid 40 supplied from the first pump 60 is introduced into the reaction tower 10 after passing through the liquid introduction tube 24.

The reaction tower 10 may have an exhaust gas inlet 11 to which the exhaust gas 30 is introduced. The liquid 40 for treating the exhaust gas 30 is introduced into the reaction tower 10. The liquid 40 becomes exhaust liquid 46 after treating the exhaust gas 30. The exhaust gas 30 becomes purified gas 34 after being treated by the liquid 40. The reaction tower 10 may have an exhaust gas outlet 17 from which the purified gas 34 is discharged. The purified gas 34 may be released into the atmosphere.

The reaction tower 10 of the present example has a side wall 15, a bottom surface 16, a gas treating portion 18, and a liquid outlet 19. The reaction tower 10 of the present example has a columnar shape. In the present example, the exhaust gas outlet 17 is located at a location opposing the bottom surface 16 in a parallel direction to a central axis of the reaction tower 10 with the columnar shape. In the present example, the side wall 15 and the bottom surface 16 are an inner surface and a bottom surface of the reaction tower 10 with the columnar shape, respectively. The exhaust gas inlet 11 may be provided on the side wall 15. In the present example, the exhaust gas 30 is introduced into the gas treating portion 18 after passing through the exhaust gas inlet 11 from the exhaust gas introduction tube 32.

The side wall 15 and the bottom surface 16 are formed of a material which has durability for the exhaust gas 30 and the purified gas 34, as well as for the liquid 40 and the exhaust liquid 46. The material may be a combination of an iron material such as SS400 or S-TEN (registered trademark) and at least one of a coating agent and a painting agent, a copper alloy such as naval brass, an aluminum alloy such as aluminum brass, a nickel alloy such as cupronickel, Hastelloy (registered trademark), and stainless steel such as SUS316L, SUS329J4L, or SUS312.

In the present specification, the technical matter may be described using the orthogonal coordinate axis of an X-axis, a Y-axis and a Z-axis. In the present specification, a plane which is parallel to the bottom surface 16 of the reaction tower 10 is referred to as an X-Y plane, and a direction toward the exhaust gas outlet 17 of the bottom surface 16 (a direction which is perpendicular to the bottom surface 16) is referred to as a Z-axis. In the present specification, a predetermined direction in the X-Y plane is referred to as an X-axis direction, and a direction which is orthogonal to the X-axis in the X-Y plane is referred to as a Y-axis direction.

A Z-axis direction may be parallel to the vertical direction. When the Z-axis direction is parallel to the vertical direction, the X-Y plane may be a horizontal plane. The Z-axis direction may be parallel to a horizontal direction. When the Z-axis direction is parallel to the horizontal direction, the X-Y plane may be parallel to the vertical direction.

The exhaust gas treatment apparatus for ships 100 is a cyclone scrubber for ships, for example. In the cyclone scrubber, the exhaust gas 30 introduced into the reaction tower 10 travels in a direction from the exhaust gas inlet 11 to the exhaust gas outlet 17 (in the present example, the Z-axis direction) while pivoting inside the reaction tower 10. In the present example, the exhaust gas 30 pivots in the X-Y plane when viewed in a direction from the exhaust gas outlet 17 to the bottom surface 16.

A traveling direction of the exhaust gas 30 from the exhaust gas inlet 11 to the exhaust gas outlet 17 inside the reaction tower 10 is referred to as a traveling direction E1. That the exhaust gas 30 is traveling in the traveling direction E1 means that the exhaust gas 30 is traveling in a direction from the exhaust gas inlet 11 to the exhaust gas outlet 17. In the present example, the traveling direction E1 of the exhaust gas 30 is parallel to the Z-axis. In Fig. 2A, the traveling direction E1 of the exhaust gas 30 is indicated by solid line arrows.

The reaction tower 10 may have one or more trunk tubes 12 and one or a plurality of branch tube 13 to which the liquid 40 is supplied. The reaction tower 10 may have one or a plurality of ejecting unit 14 configured to eject the liquid 40. In the present example, the ejecting unit 14 is connected to the branch tube 13, and the branch tube 13 is connected to the trunk tube 12.

The reaction tower 10 of the present example has three trunk tubes 12 (a trunk tube 12-1, a trunk tube 12-2, and a trunk tube 12-3). In the present example, the trunk tube 12-1 and the trunk tube 12-3 are trunk tubes 12 respectively provided closest to the exhaust gas inlet 11 side and the exhaust gas outlet 17 side in a direction parallel to the Z-axis. In the present example, the trunk tube 12-2 is the trunk tube 12 provided between the trunk tube 12-1 and the trunk tube 12-3 in the Z-axis direction.

The reaction tower 10 of the present example includes branch tubes 13-1 to 13-12. In the present example, the branch tube 13-1 and the branch tube 13-12 are branch tubes 13 respectively provided closest to the exhaust gas inlet 11 side and the exhaust gas outlet 17 side in a direction parallel to the Z-axis. In the present example, the branch tube 13-1, the branch tube 13-3, the branch tube 13-5, the branch tube 13-7, the branch tube 13-9 and the branch tube 13-11 are extending in the Y-axis direction, and the branch tube 13-2, the branch tube 13-4, the branch tube 13-6, the branch tube 13-8, the branch tube 13-10 and the branch tube 13-12 are extending in the X-axis direction.

In the present example, the branch tubes 13-1 to 13-4 are connected to the trunk tube 12-1, the branch tubes 13-5 to 13-8 are connected to the trunk tube 12-2, and the branch tubes 13-9 to 13-12 are connected to the trunk tube 12-3. The branch tube 13-1, the branch tube 13-3, the branch tube 13-5, the branch tube 13-7, the branch tube 13-9 and the branch tube 13-11 may be located on both sides of the trunk tube 12 in a direction parallel to the Y-axis. The branch tube 13-2, the branch tube 13-4, the branch tube 13-6, the branch tube 13-8, the branch tube 13-10 and the branch tube 13-12 may be located on both sides of the trunk tube 12 in a direction parallel to the X-axis.

To describe the branch tube 13-1 as an example, a branch tube 13-1A and a branch tube 13-1B are the branch tube 13-1 respectively located on one side and the other side of the trunk tube 12-1 in the direction parallel to the Y-axis. In the direction parallel to the Y-axis, the branch tube 13-1A and the branch tube 13-1B may be provided in such a way as to sandwich the trunk tube 12-1. It should be noted that, in Fig. 2A, the branch tube 13-1A and the branch tube 13-3A are not illustrated in the figure since they are located at a location overlapping the trunk tube 12-1.

To describe the branch tube 13-2 as an example, a branch tube 13-2A and a branch tube 13-2B are the branch tube 13-2 respectively located on one side and the other side of the trunk tube 12-1 in the direction parallel to the X-axis. In the direction parallel to the X-axis, the branch tube 13-2A and the branch tube 13-2B may be provided in such a way as to sandwich the trunk tube 12-1.

The reaction tower 10 of the present example includes ejecting units 14-1 to 14-12. In the present example, the ejecting unit 14-1 and the ejecting unit 14-12 are ejecting units 14 respectively provided closest to the exhaust gas inlet 11 side and the exhaust gas outlet 17 side in a direction parallel to the Z-axis. The ejecting units 14-1 to 14-12 of the present example are respectively connected to the branch tubes 13-1 to 13-12. In one branch tube 13 extending in the Y-axis direction, a plurality of ejecting units 14 may be provided on one side of the trunk tube 12 in the direction parallel to the Y-axis, and a plurality of ejecting units 14 may be provided on the other side. In one branch tube 13 extending in the X-axis direction, a plurality of ejecting units 14 may be provided on one side of the trunk tube 12 in the direction parallel to the X-axis, and a plurality of ejecting units 14 may be provided on the other side. It should be noted that, in Fig. 2A, the ejecting unit 14-1A, the ejecting unit 14-3A, the ejecting unit 14-5A, the ejecting unit 14-7A, the ejecting unit 14-9A and the ejecting unit 14-11A are not illustrated in the figure since they are located at a location overlapping the trunk tube 12.

The ejecting unit 14 has opening planes for ejecting the liquid 40. In Fig. 2A, the opening planes are indicated by "×". In one branch tube 13, the respective opening planes of the ejecting units 14 located on the one side and the other side of the trunk tube 12 may face one direction and the other direction forming a predetermined angle to the extending direction of the branch tube 13. To describe the ejecting unit 14-2 as an example, in the present example, the opening plane of the ejecting unit 14-2A located on one side of the trunk tube 12-1 is facing one direction forming a predetermined angle with the branch tube 13-2A, and the opening plane of the ejecting unit 14-2B located on the other side of the trunk tube 12-1 is located at one direction forming a predetermined angle with the branch tube 13-2B.

The exhaust gas treatment apparatus for ships 100 may further include a volumetric flow rate controlling unit 70. The volumetric flow rate controlling unit 70 is configured to control a volumetric flow rate of the liquid 40 supplied into the reaction tower 10. The volumetric flow rate controlling unit 70 may have a valve 72. In the present example, the volumetric flow rate controlling unit 70 controls, by the valve 72, the volumetric flow rate of the liquid 40 supplied from the first pump 60 to the ejecting unit 14. In the present example, the volumetric flow rate controlling unit 70 includes three valves 72 (a valve 72-1, a valve 72-2 and a valve 72-3). In the present example, the volumetric flow rate controlling unit 70 controls, by the valve 72-1, the valve 72-2 and the valve 72-3, a volumetric flow rate of the liquid 40 respectively supplied into the trunk tube 12-1, the trunk tube 12-2 and the trunk tube 12-3. The liquid 40 supplied to the trunk tube 12 is ejected into an inside of the reaction tower 10 (a gas treating portion 18) from the ejecting unit 14 after passing through the branch tube 13.

The controlling unit 74 is configured to control an amount of the liquid 40 ejected by the ejecting unit 14. The controlling unit 74 may control the amount of the liquid 40 ejected per unit time by the ejecting unit 14. In the present example, the controlling unit 74 controls the amount of the liquid 40 ejected by the ejecting unit 14 by controlling the volumetric flow rate controlling unit 70.

The volumetric flow rate controlling unit 70 may control the amount of the liquid 40 ejected by the ejecting unit 14 by controlling the opening degree of the valve 72. The volumetric flow rate controlling unit 70 may control the amount of the liquid 40 ejected per unit time by the ejecting unit 14 by controlling the opening degree of the valve 72. When the reaction tower 10 includes a plurality of ejecting units 14, the volumetric flow rate controlling unit 70 may control the amount of the liquid 40 ejected by each of the plurality of ejecting units 14, by controlling the opening degree of each of the valve 72-1 to the valve 72-3.

The volumetric flow rate controlling unit 70 may control the volumetric flow rate of the liquid 40 such that a volumetric flow rate of the liquid 40 supplied to the trunk tube 12-1 is greater than a volumetric flow rate of the liquid 40 supplied to the trunk tube 12-2. The volumetric flow rate controlling unit 70 may control the volumetric flow rate of the liquid 40 such that a volumetric flow rate of the liquid 40 supplied to the trunk tube 12-2 is greater than a volumetric flow rate of the liquid 40 supplied to the trunk tube 12-3. A ratio between the volumetric flow rate of the liquid 40 supplied to the trunk tube 12-3, the volumetric flow rate of the liquid 40 supplied to the trunk tube 12-2, and the volumetric flow rate of the liquid 40 supplied to the trunk tube 12-1 is 1:2:9, for example.

As described above, the liquid 40 is sea water or alkaline liquid, for example. When the liquid 40 is alkaline liquid, the liquid 40 may be alkaline liquid in which at least one of sodium hydroxide (NaOH) and sodium hydrogen carbonate (Na₂CO₃) is added.

The exhaust gas 30 includes harmful substances such as sulfur oxide (SOₓ). The sulfur oxide (SOₓ) is, for example, sulfurous acid gas (SO₂). When the liquid 40 is sodium hydroxide (NaOH) aqueous solution, a reaction of the sulfurous acid gas (SO₂) included in the exhaust gas 30 with the sodium hydroxide (NaOH) is shown in the chemical formula 1 below.

CHEMICAL FORMULA 1 SO₂+Na⁺+OH⁻→Na⁺+HSO₃⁻

As shown in the chemical formula 1, the sulfurous acid gas (SO₂) becomes a bisulfite ion (HSO₃⁻) by a chemical reaction. The liquid 40 becomes exhaust liquid 46 including the bisulfite ion (HSO₃⁻) by this chemical reaction. The exhaust liquid 46 may be discharged from a drain tube 20 to the outside of the exhaust gas treatment apparatus for ships 100. The exhaust gas 30 becomes purified gas 34 from which at least part of the harmful substances such as the sulfur oxide (SOₓ) is removed by this chemical reaction.

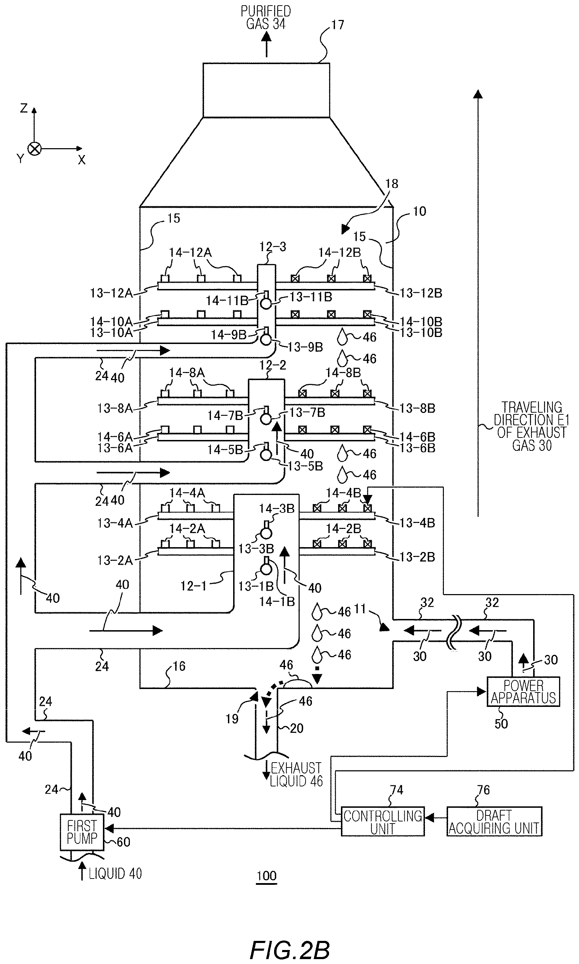

Fig. 2B shows another example of the exhaust gas treatment apparatus for ships 100 according to one embodiment of the present invention. In the present example, the exhaust gas treatment apparatus for ships 100 is different from the exhaust gas treatment apparatus for ships 100 shown in Fig. 2A in that it does not include a volumetric flow rate controlling unit 70 and a valve 72.

In the present example, the controlling unit 74 is configured to control the amount of the liquid 40 ejected by the ejecting unit 14 by controlling the opening degree of the opening plane of the ejecting unit 14. When the reaction tower 10 includes a plurality of ejecting units 14, the controlling unit 74 may control the amount of the liquid 40 ejected by each of the plurality of ejecting units 14, by controlling the opening degree in the opening of each of the plurality of ejecting units 14. In Fig. 2B, an arrow from the controlling unit 74 to one of three ejecting units 14-4B is shown. In Fig. 2B, any arrow from the controlling unit 74 to other than one of the three ejecting units 14-4B is omitted.

When the reaction tower 10 includes a plurality of ejecting units 14, the controlling unit 74 may independently control the amount of the liquid 40 ejected by each of the plurality of ejecting units 14. The control of the ejecting unit 14 performed by the controlling unit 74 is described below.

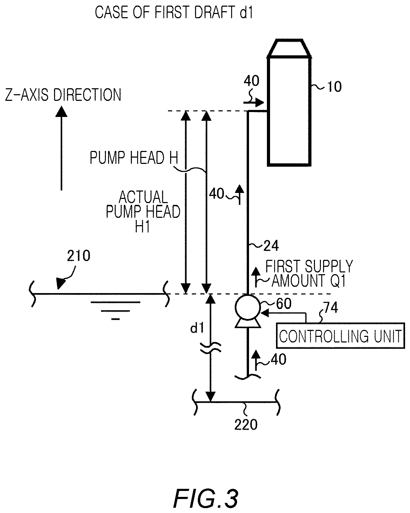

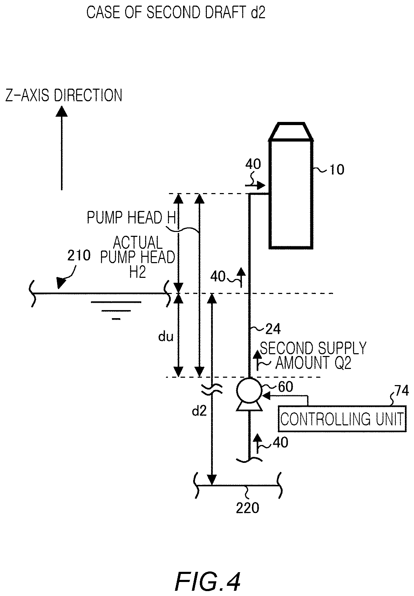

Fig. 3 and Fig. 4 show one example of an exhaust gas treatment apparatus for ships 100 according to one embodiment of the present invention. In Fig. 3 and Fig. 4, a relationship between a draft d of the ship 200 and a pump head H of the first pump 60 is shown in the exhaust gas treatment apparatus for ships 100 shown in Fig. 1, Fig. 2A and Fig. 2B.

However, in Fig. 3 and Fig. 4, illustration of the power apparatus 50, the draft acquiring unit 76 and the draft sensor 31 shown in Fig. 1 is omitted. In the present example, the liquid 40 flowing through the liquid introduction tube 24 is the sea water of the ocean 300 (see Fig. 1).

In the present example, the pump head H of the first pump 60 refers to a discharge height of the liquid 40 required by the first pump 60 for introducing the liquid 40 into the reaction tower 10. Fig. 3 and Fig. 4 respectively show a case in which the draft d is a first draft d1, and a case in which the draft d is a second draft d2. In the present example, the second draft d2 is higher than the first draft d1. A distance from a water surface 210 to a ship bottom 220 in the case of the second draft d2 is greater than a distance from a water surface 210 to a ship bottom 220 in the case of the first draft d1.

In the example shown in Fig. 3, the first pump 60 in the case in which the draft d is the first draft d1 is located at the same height as the water surface 210. In the case of the first draft d1, a substantial pump head required for the first pump 60 is referred to as an actual pump head H1. In the case of the first draft d1, the actual pump head H1 is equal to the pump head H.

In the example shown in Fig. 4, a depth of the first pump 60 from the water surface 210 in the case in which the draft d is the second draft d2 is referred to as a depth du. When the draft d is the second draft d2, the liquid 40 flowing within the liquid introduction tube 24 likely to reach the location of the water surface 210 in the vertical direction, even if there is no pressure by the first pump 60.

In the case in which the draft d is the second draft d2, a substantial pump head required for the first pump 60 is referred to as an actual pump head H2. When the draft d is the second draft d2, the pump head H of the first pump 60 is likely to be equal to the actual pump head H2 (pump head H - depth du). The actual pump head H2 is less than the actual pump head H1.

The output P of the first pump 60 in the case in which the draft d is the first draft d1 is referred to as a first output P1, and the output P of the first pump 60 in the case in which the draft d is the second draft d2 is referred to as a second output P2, respectively. A supply amount Q of the liquid 40 per unit time from the first pump 60 in the case in which the draft d is the first draft d1 is referred to as a first supply amount Q1, and a supply amount Q of the liquid 40 per unit time from the first pump 60 in the case in which the draft d is the second draft d2 is referred to as a second supply amount Q2, respectively. The controlling unit 74 may control the second output P2 to be less than the first output P1 when the second draft d2 is higher than the first draft d1.

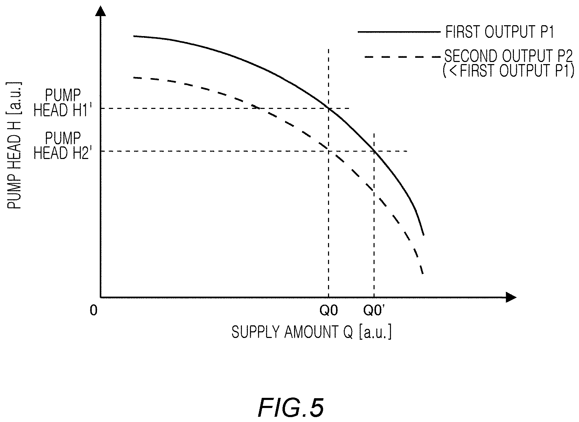

Fig. 5 shows a relationship between a pump head H of a first pump 60 and a supply amount Q of liquid 40 per unit time supplied from the first pump 60. When the first pump 60 is turbo type, the output P, the supply amount Q and the pump head H meet the relationship of P=kQH. Herein, k is a proportionality constant. In Fig. 5, a case in which the output P of the first pump 60 is the first output P1 is indicated by a solid line, and a case in which the output P of the first pump 60 is the second output P2 is indicated by a rough dashed line, respectively.

In the case in which the first pump 60 supplies the liquid 40 with a supply amount Q0 per unit time, a pump head H2' in the case of the second output P2 is less than a pump head H1' in the case of the first output P1.;

In the case in which the pump head of the liquid 40 supplied by the first pump 60 is the pump head H2', the supply amount Q0 in the case of the second output P2 is less than a supply amount Q0' in the case of the first output P1.

In the examples shown in Fig. 3 and Fig. 4, the actual pump head H2 in the case of the second draft d2 is likely to be less than the actual pump head H1 in the case of the first draft d1. Therefore, when the first supply amount Q1 and the second supply amount Q2 are equal (for example, when the first supply amount Q1 and the second supply amount Q 2 are supply amount Q0), the second output P2 may be less than the first output P1. In the case in which the first pump 60 is located at a location lower than the water surface 210 in the vertical direction, the output P of the first pump may be less, by a length of the pump head corresponding to the depth du, than the output P of the first pump in the case in which the first pump 60 is located at a location of the water surface 210.

In the exhaust gas treatment apparatus for ships 100 of the present example, when the second draft d2 is higher than the first draft d1, the controlling unit 74 controls the second output P2 of the first pump 60 to be less than the first output P1. Therefore, the exhaust gas treatment apparatus for ships 100 of the present example can reduce the power consumption of the first pump 60 compared to the case in which the output P of the first pump 60 is controlled to be constant regardless of the draft d. In the exhaust gas treatment apparatus for ships 100 of the present example, when the second draft d2 is higher than the first draft d1, the controlling unit 74 simulatively controls the output P of the first pump 60 to a pump with an output less than the first output P1 (the second output P2). In this manner, the exhaust gas treatment apparatus for ships 100 of the present example can reduce the power consumption of the first pump 60.

When the draft d is changed from the first draft d1 to the second draft d2, the controlling unit 74 may control the output P of the first pump 60 from the first output P1 to the second output P2 which is less than the first output P1. When the draft d is changed from the second draft d2 to the first draft d1, the controlling unit 74 may control the output P of the first pump 60 from the second output P2 to the first output P1 which is greater than the second output P2.

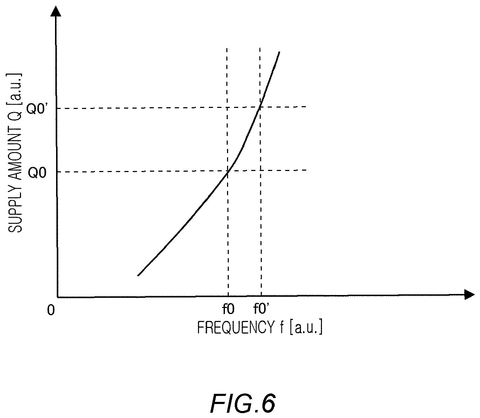

Fig. 6 shows a relationship between a frequency f of an electric motor configured to drive the first pump 60 and the supply amount Q of the liquid 40 per unit time supplied from the first pump 60. An electric motor configured to drive the first pump 60 is referred to as an electric motor M. When the first pump 60 is turbo type, the supply amount Q is likely to increase as the frequency f increases. The frequency f of the electric motor M in the case in which the first pump 60 supplies the liquid 40 of the supply amount Q per unit time is referred to as a frequency f0, and the frequency f of the electric motor M in the case in which the first pump 60 supplies the liquid 40 of the supply amount Q' per unit time is referred to as a frequency f0', respectively. The frequency f0 is the frequency f of the electric motor M in the case in which the output P of the first pump 60 is the second output P2, and the frequency f0' is the frequency f of the electric motor M in the case in which the output P of the first pump 60 is the first output P1, respectively.

As shown in Fig. 6 and Fig. 5, when the pump head H is changed from the pump head H1' to the pump head H2' while the output P of the first pump 60 is maintained to be the first output P1, the supply amount of the liquid 40 of the first pump 60 is Q0' which is greater than Q0. Therefore, in the examples shown in Fig. 3 and Fig. 4, when the draft d is changed from the first draft d1 to the second draft d2 while the controlling unit 74 maintains the output P of the first pump 60 to be the first output P1, the amount of the liquid 40 per unit time supplied from the first pump 60 is likely to be excessive.

In the exhaust gas treatment apparatus for ships 100 of the present example, when the second draft d2 is higher than the first draft d1, the controlling unit 74 controls the output P of the first pump 60 to be the second output P2 which is less than the first output P1. Therefore, the exhaust gas treatment apparatus for ships 100 of the present example is likely to suppress the excessive supply of the liquid 40 by the first pump 60 to the reaction tower 10, compared to the case in which the output P of the first pump 60 is controlled to be constant regardless of the draft d.

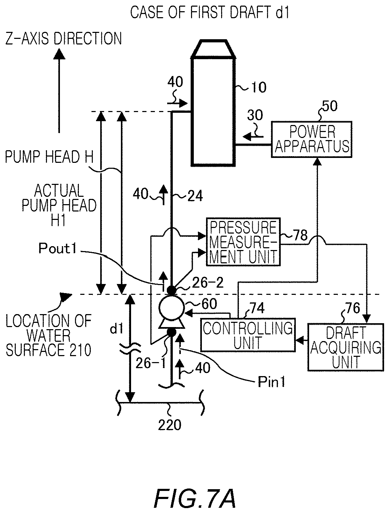

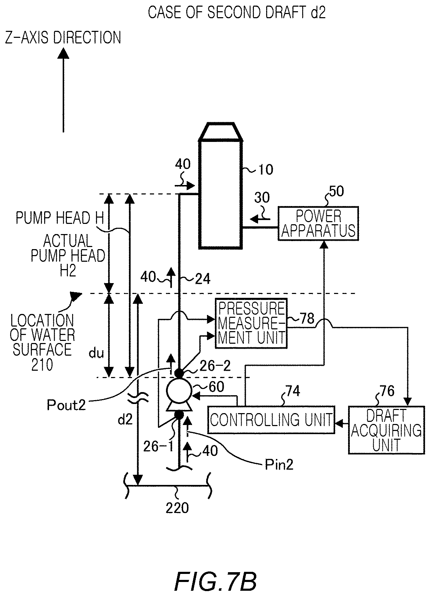

Fig. 7A and Fig. 7B show another example of the exhaust gas treatment apparatus for ships 100 according to one embodiment of the present invention. The exhaust gas treatment apparatus for ships 100 of the present example is different from the exhaust gas treatment apparatus for ships 100 shown in Fig. 2A, Fig. 2B, Fig. 3 and Fig. 4 in that it further includes a pressure measurement unit 78. In Fig. 7A, an example of the case in which the draft d of the ship 200 is the first draft d1 is shown. In Fig. 7B, an example of the case in which the draft d of the ship 200 is the second draft d2 is shown.

The exhaust gas treatment apparatus for ships 100 may include a pressure sensor 26. The pressure sensor 26 of the present example is provided on a liquid introduction tube 24. In the present example, the exhaust gas treatment apparatus for ships 100 includes two pressure sensors 26 (a pressure sensor 26-1 and a pressure sensor 26-2). The pressure sensor 26-1 is provided before the first pump 60 in a flow channel of the liquid 40 in the liquid introduction tube 24. The pressure sensor 26-2 is provided after the first pump 60 in the flow channel of the liquid 40 in the liquid introduction tube 24. In the present example, the pressure sensor 26-1 senses a suction pressure of the liquid 40 which is inputted into the first pump 60. The suction pressure is referred to as a suction pressure Pin. In the present example, the pressure sensor 26-2 senses a discharge pressure of the liquid 40 outputted from the first pump 60. The discharge pressure is referred to as a discharge pressure Pout.

The pressure measurement unit 78 measures at least one of the suction pressure Pin of the liquid 40 which is inputted into the first pump 60 and the discharge pressure Pout of the liquid 40 which is outputted from the first pump 60. In the present example, the pressure measurement unit 78 measures at least one of the suction pressure Pin of the liquid 40 sensed by the pressure sensor 26-1 and the discharge pressure Pout of the liquid 40 sensed by the pressure sensor 26-2.

The draft acquiring unit 76 may acquire the draft d of the ship 200 based on at least one of the suction pressure Pin and the discharge pressure Pout. A distance in the vertical direction from the water surface 210 to the first pump 60 is likely to increase as the draft d increases. Therefore, the suction pressure Pin and the discharge pressure Pout are likely to increase as the draft d increases. Therefore, the draft acquiring unit 76 can acquire the draft d of the ship 200 based on at least one of the suction pressure Pin and the discharge pressure Pout. The controlling unit 74 may control the output of the first pump 60 based on the draft d.

A suction pressure Pin in the case in which the draft d is the first draft d1 is referred to as a suction pressure Pin 1, and a discharge pressure Pout in the case in which the draft d is the first draft d1 is referred to as a discharge pressure Pout 1, respectively. A suction pressure Pin in the case in which the draft d is the second draft d2 is referred to as a suction pressure Pin2, and a discharge pressure Pout in the case in which the draft d is the second draft d2 is referred to as a discharge pressure Pout2, respectively. In the present example, the draft acquiring unit 76 acquires the first draft d1 of the ship 200 based on at least one of the suction pressure Pin 1 and the discharge pressure Pout 1. In the present example, the draft acquiring unit 76 acquires the second draft d2 of the ship 200 based on at least one of the suction pressure Pin 2 and the discharge pressure Pout 2.

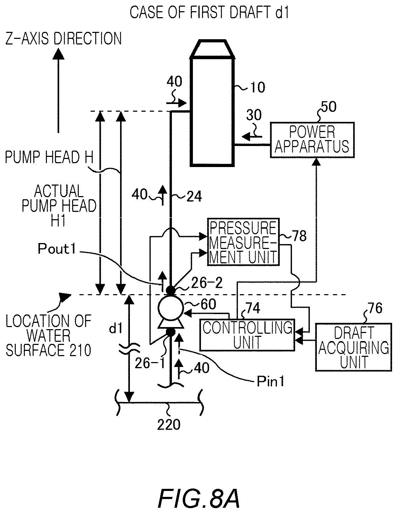

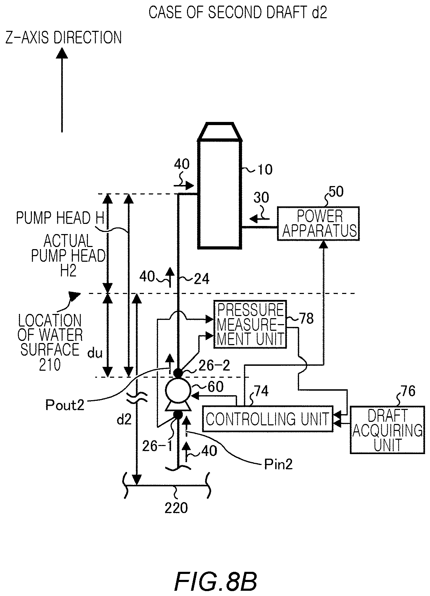

Fig. 8A and Fig. 8B show another example of the exhaust gas treatment apparatus for ships 100 according to one embodiment of the present invention. In the exhaust gas treatment apparatus for ships 100 of the present example, the controlling unit 74 controls the output P of the first pump 60 based on at least one of the suction pressure Pin and the discharge pressure Pout. In this point, the exhaust gas treatment apparatus for ships 100 of the present example is different from the exhaust gas treatment apparatus for ships 100 shown in Fig. 7A and Fig. 7B. The controlling unit 74 may directly control, not based on the draft d, the output P of the first pump 60 from at least one of the suction pressure Pin and the discharge pressure Pout.

In the vertical direction, a distance from the water surface 210 to the first pump 60 in the case in which the draft d is the second draft d2 is greater than a distance from the water surface 210 to the first pump 60 in the case in which the draft d is the first draft d1. Therefore, the suction pressure Pin 2 is likely to be greater than the suction pressure Pin 1. Upward pressure in the vertical direction which corresponds to the distance du is likely to be applied to the liquid 40 which is inputted into the first pump 60 in the case of the second draft d2, compared to the liquid 40 which is inputted into the first pump 60 in the case of the first draft d1. Therefore, the controlling unit 74 may control the second output P of the first pump 60 in the case of the second draft d2 to be less than the first output P1 of the first pump 60 in the case of the first draft d1.

In the case in which the draft d is the second draft d2, the liquid 40 of the depth du tends to be present above the first pump 60. Therefore, the discharge pressure Pout 2 is likely to be greater than the discharge pressure Pout 1. Therefore, the controlling unit 74 may control the second output P of the first pump 60 in the case of the second draft d2 to be greater than the first output P1 of the first pump 60 in the case of the first draft d1.

The controlling unit 74 may control the output of the first pump based on both the suction pressure Pin and the discharge pressure Pout. The controlling unit 74 may reduce the second output P2 of the first pump 60 to be less than the first output P1 or may increase the second output P2 of the first pump 60 to be greater than the first output P1, based on the suction pressure Pin 1 and the discharge pressure Pout 1, as well as the suction pressure Pin 2 and the discharge pressure Pout 2.

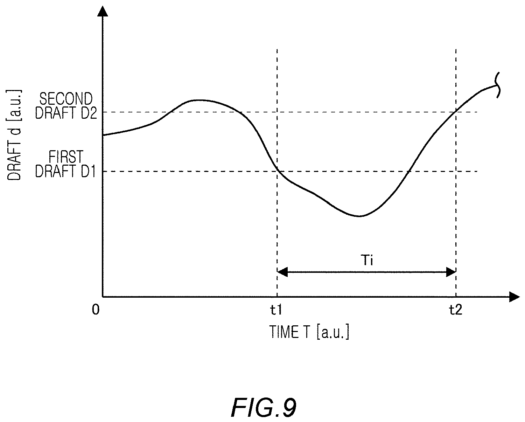

Fig. 9 shows one example of a relationship between a time t and a draft d of the ship 200. In the present example, the draft d of the ship 200 is changed along with a lapse of the time t. In the present example, the first draft d1 is a draft d at a first clock time t1, and the second draft d2 is a draft d at a second clock time t2. In the present example, the second clock time t2 is a clock time after a lapse of a predetermined time Ti from the first clock time t1.

The draft acquiring unit 76 (see Fig. 1, Fig. 2A, Fig. 2B, Fig. 7A, Fig. 7B, Fig. 8A and Fig. 8B) may acquire the first draft d1 at the first clock time t1 and may acquire the second draft d2 at the second clock time t2. The controlling unit 74 may control the output P of the first pump 60 to be the first output P1 when the draft d is the first draft d1, and may control the output P of the first pump 60 to be the second output P2 when the draft d is the second draft d2. The second output P2 may be different from the first output P1.

In the present example, the controlling unit 74 is configured to control the output P of the first pump 60 to be the first output P1 at the first clock time t1, and control the output P of the first pump 60 to be the second output P2 at the second clock time t2. Therefore, the exhaust gas treatment apparatus for ships 100 of the present example is likely to control the output P of the first pump 60 so that the supply amount of the liquid 40 per unit time to the reaction tower 10 is not excessive while ensuring the pump head H required for supplying the liquid 40 of the reaction tower 10 at each of the first clock time t1 and the second clock time t2.

The draft acquiring unit 76 (see Fig. 1, Fig. 2A, Fig. 2B, Fig. 7A, Fig. 7B, Fig. 8A and Fig. 8B) may continuously acquire the draft d along with the lapse of the time t. The controlling unit 74 may continuously control the output P of the first pump 60 according to the draft d which is continuously changed along with the lapse of the time t. With the controlling unit 74 continuously controlling the output P of the first pump 60 according to the draft d which is continuously changed along with the lapse of the time t, the exhaust gas treatment apparatus for ships 100 of the present example is likely to continuously control the output P of the first pump 60 such as the supply amount per unit time of the liquid 40 to the reaction tower 10 is not continuously excessive while continuously ensuring the pump head H required for supplying the liquid 40 to the reaction tower 10.

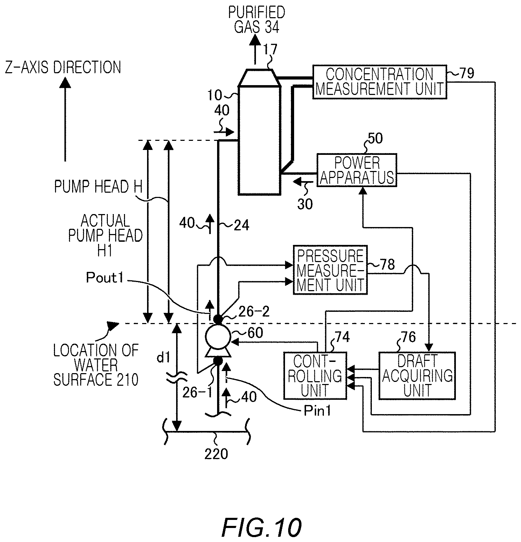

Fig. 10 shows another example of the exhaust gas treatment apparatus for ships 100 according to one embodiment of the present invention.

The exhaust gas treatment apparatus for ships 100 of the present example is different from the exhaust gas treatment apparatus for ships 100 shown in Fig. 7A and Fig. 7B in that it further includes a concentration measurement unit 79. In Fig. 10, a case in which the draft d of the ship 200 is the first draft d1 is shown.

At least one of a concentration of sulfur dioxide (SO₂) and a concentration of carbon dioxide (CO₂) of the exhaust gas 30 is referred to as a concentration C. A ratio of the sulfur dioxide (SO₂) concentration [ppm] to the carbon dioxide (CO₂) concentration [%] of the exhaust gas 30 (sulfur dioxide (SO₂) concentration [ppm]/carbon dioxide (CO₂) concentration [%]) is referred to as a ratio R. The exhaust gas 30 may be the exhaust gas 30 passing through the exhaust gas introduction tube 32 (see Fig. 2A and Fig. 2B).

At least one of a concentration of sulfur dioxide (SO₂) and a concentration of carbon dioxide (CO₂) of the purified gas 34 is referred to as a concentration C'. A ratio of the sulfur dioxide (SO₂) concentration [ppm] to the carbon dioxide (CO₂) concentration [%] of the purified gas 34 is referred to as a ratio R'. As described above, the purified gas 34 is a gas generated after the exhaust gas 30 is treated by the liquid 40.

The concentration measurement unit 79 is configured to measure at least one of the concentration C and the concentration C'. The concentration measurement unit 79 is, for example, a laser-type gas analyzer. The concentration measurement unit 79 may calculate at least one of the ratio R and the ratio R'.

The controlling unit 74 may control the output P of the first pump 60 based on at least one of the concentration C and the concentration C' measured by the concentration measurement unit 79. The controlling unit 74 may control the output P of the first pump 60 based on at least one of the ratio R and the ratio R' calculated by the concentration measurement unit 79.

In the case of navigating the ocean 300 of the ship 200 (see Fig. 1), a resistance force that the ship hull 230 (see Fig. 1) receives from the ocean 300 is referred to as a resistance force Fr. The resistance force Fr is likely to be changed by the draft d. The resistance force Fr is likely to increase as the draft d increases. A resistance force Fr in the case in which the draft d is the first draft d1 (see Fig. 7A) is referred to as a resistance force Fr1, and a resistance force Fr in the case in which the draft d is the second draft d2 (see Fig. 7B) is referred to as a resistance force Fr2. When a navigation speed in the case in which the draft d of the ship 200 is the first draft d1 and a navigation speed in the case in which the draft d is the second draft d2 are equal, the resistance force Fr2 is likely to be greater than the resistance force Fr1.

In the case in which the ship 200 navigates the ocean 300, at least one of a concentration of sulfur dioxide (SO₂) and a concentration of the carbon dioxide (CO₂) of the exhaust gas 30 discharged from the power apparatus 50 when the draft d is the first draft d1 is referred to as a concentration C1, and at least one of a concentration of sulfur dioxide (SO₂) and a concentration of carbon dioxide (CO₂) of the exhaust gas 30 discharged from the power apparatus 50 when the draft d is the second draft d2 is referred to as a concentration C2. In the case in which the ship 200 navigates the ocean 300, at least one of a concentration of sulfur dioxide (SO₂) and a concentration of the carbon dioxide (CO₂) of the purified gas 34 in the case in which the draft d is the first draft d1 is referred to as a concentration C1', and at least one of a concentration of sulfur dioxide (SO₂) and a concentration of carbon dioxide (CO₂) of the purified gas 34 in the case in which the draft d is the second draft d2 is referred to as a concentration C2'.

A concentration of harmful substances included in the exhaust gas 30 discharged from the power apparatus 50 is likely to be changed by the resistance force Fr. The concentration of the harmful substances is likely to increase as the resistance force Fr increases. Therefore, the concentration C2 is likely to be greater than the concentration C1. When the concentration C2 is greater than the concentration C1, the concentration C2' is likely to be greater than the concentration C1'.

A concentration of sulfur (S) included in the fuel which can be used in the ship and the above-mentioned ratio R' of the purified gas 34 (SO₂/CO₂) has a regulation value determined by the International Convention for the Prevention of Pollution from Ships. The regulation values for the sulfur (S) concentration and the ratio R' are different depending on the sea area. In the sea area with the most strict regulation value, the regulation value of the sulfur (S) concentration is equal to or less than 0.1 weight percent and the regulation value of the ratio R' is equal to or less than 4.3 (hereinabove, the current standards for 2020).

The controlling unit 74 may control the output P of the first pump 60 based on the concentration C measured by the concentration measurement unit 79 and the draft d of the ship 200 acquired by the draft acquiring unit 76. The controlling unit 74 may control the power of the power apparatus 50 based on the concentration C and the draft d of the ship 200.

As described in Fig. 3 and Fig. 4, the actual pump head H2 in the case in which the draft d is the second draft d2 is less than the actual pump head H1 in the case in which the draft d is the first draft d1. Therefore, when the supply amount Q of the liquid 40 per unit time supplied from the first pump 60 is constant, the second output P2 of the first pump 60 may be less than the first output P1.

However, as described above, the concentration C2 in the case of the second draft d2 is likely to be greater than the concentration C1 in the case of the first draft d1. Therefore, when the supply amount Q of the liquid 40 from the first pump 60 is constant in the case of the first draft d1 and in the case of the second draft d2, the harmful substances included in the exhaust gas 30 are difficult to be removed by the liquid 40. When the harmful substances included in the exhaust gas 30 are difficult to be removed, the ratio R' of the purified gas 34 may not meet the above-mentioned regulation value. Therefore, the second supply amount Q 2 in the case of the second draft d2 (see Fig. 3 and Fig. 4) is preferred to be greater than the first supply amount Q1 in the case of the first draft d1 (see Fig. 3 and Fig. 4).

In the present example, the controlling unit 74 may control the second output P2 of the first pump 60 to be less than the first output P1, may control the second output P2 to be greater than the first output P1, and may control the second output P2 to be an output equal to the first output P1. That is, in the present example, the controlling unit 74 may control a magnitude relationship between the first output P1 and the second output P2 based on a balance between a magnitude relationship between the actual pump head H1 and the actual pump head H2 and a magnitude relationship between the concentration C1 and the concentration C2.

The controlling unit 74 may control the output P of the first pump 60 based on the concentration C' measured by the concentration measurement unit 79 and the draft d of the ship 200 acquired by the draft acquiring unit 76. In this manner, the exhaust gas treatment apparatus for ships 100 in the present example ensures the pump head H require for supplying the liquid 40 into the reaction tower 10, causes the supply amount of the liquid 40 per unit time into the reaction tower 10 not to be excessive, and likely to control the output P of the first pump 60 so that the ratio R' of the purified gas 34 meets the above-mentioned regulation value. The controlling unit 74 may control the output P of the first pump 60 based on the concentration C, the concentration C' and the draft d of the ship 200.

The controlling unit 74 may control the power of the power apparatus 50 based on the concentration C' and the draft d of the ship 200. In this manner, the exhaust gas treatment apparatus for ships 100 of the present example is likely to control the output P of the first pump 60 so that the ratio R' of the purified gas 34 meets the above-mentioned regulation value. The controlling unit 74 may control the power of the power apparatus 50 based on the concentration C, the concentration C' and the draft d of the ship 200.

The concentration measurement unit 79 may continuously measure at least one of the concentration C and the concentration C' along with the lapse of the time t. The concentration measurement unit 79 may continuously calculate at least one of the ratio R and the ratio R' along with the lapse of the time t. In this manner, the exhaust gas treatment apparatus for ships 100 in the present example continuously ensures the pump head H require for supplying the liquid 40 into the reaction tower 10, causes the supply amount of the liquid 40 per unit time into the reaction tower 10 not to be continuously excessive, and is likely to continuously controls the output P of the first pump 60 so that the ratio R' of the purified gas 34 continuously meets the above-mentioned regulation value.

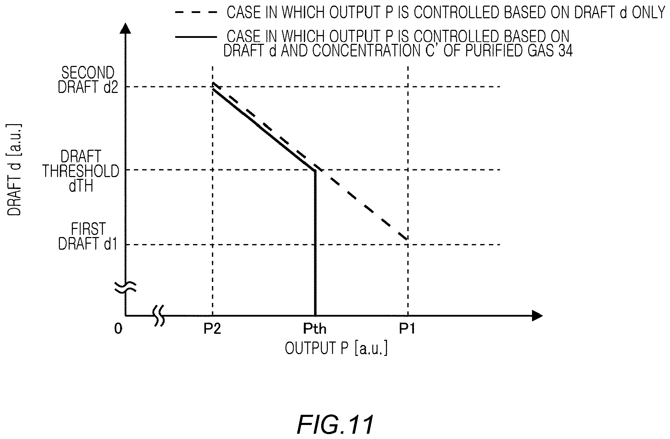

Fig. 11 shows one example of a relationship between an output P of the first pump 60 and a draft d of the ship 200. In Fig. 11, the solid line indicates one example of a case in which the output P of the first pump 60 is controlled based on the draft d of the ship 200 and the concentration C' of the purified gas 34. In Fig. 11, the rough dashed line indicates one example of a case in which the output P of the first pump 60 is controlled based on the draft d of the ship 200 only. The controlling unit 74 (see Fig. 7A, Fig. 7B, Fig. 8A and Fig. 8B) may control the output P of the first pump 60 to be reduced as the draft d decreases.

In the present example, the first draft d1 is a lowest draft which is the lowest draft of the ship 200, and the second draft d2 is a highest draft which is the highest draft of the ship 200. A difference between the lowest draft and the highest draft (a difference between d2 in Fig. 7B and d1 in Fig. 7A) may be 4m or more and 8m or less, or may be 5m or more and 7m or less. The difference between the lowest draft and the highest draft is 6m, for example.

As described in Fig. 10, the resistance force Fr that the ship hull 230 (see Fig. 1) receives from the ocean 300 (see Fig. 1) is likely to be changed by the draft d of the ship 200. The resistance force Fr is likely to be reduced as the draft d decreases. Therefore, when a navigation speed in the case in which the draft d of the ship 200 is the first draft d1 and a navigation speed in the case in which the draft d is the second draft d2 are equal, the power of the power apparatus 50 in the case in which the draft d is the first draft d1 is likely to be reduced compared to the power of the power apparatus 50 in the case in which the draft d is the second draft d2. Therefore, when a navigation speed in the case in which the draft d is the first draft d1 and a navigation speed in the case in which the draft d is the second draft d2 are equal, the above-mentioned concentration C and the concentration C' are likely to be reduced as the resistance force Fr decreases. As the concentration C decreases, the amount Q of the liquid 40 per unit time supplied by the first pump 60 may decrease.

The controlling unit 74 (see Fig. 7A, Fig. 7B, Fig. 8A and Fig. 8B) may control the output P of the first pump 60 to be a predetermined constant output Pth when the draft d is less than a predetermined draft threshold dth. In Fig. 11, the case in which the output P of the first pump is controlled to be the output Pth when the draft d is less than the draft threshold dth is indicated by the solid line.

As described above, as the concentration C decreases, the amount Q of the liquid 40 per unit time supplied by the first pump 60 may decrease. Therefore, when the output P of the first pump 60 is controlled based on the concentration C' of the controlling unit 74 and the draft d of the ship 200, the amount Q of the liquid 40 is likely to be reduced compared to the case in which the output P of the first pump 60 is controlled based on the draft d only. Therefore, the output P of the first pump in the case in which the controlling unit 74 controls the output P of the first pump 60 based on the concentration C' and the draft d is likely to be less than the output P of the first pump 60 in the case in which the output P of the first pump 60 is controlled based on the draft d only.

In the present example, the controlling unit 74 (see Fig. 7A, Fig. 7B, Fig. 8A and Fig. 8B) is configured to control the output P of the first pump 60 to be a predetermined constant output Pth when the draft d is less than a draft threshold dth. Therefore, the exhaust gas treatment apparatus for ships 100 of the present example can reduce the output P of the first pump 60 in a time period where the draft d is less than the first draft d1 and the draft threshold dth, compared to the case in which the output P of the first pump 60 is controlled based on the draft d only (in the case of the rough dashed line in Fig. 11). Therefore, the exhaust gas treatment apparatus for ships 100 of the present example can reduce the power consumption of the first pump 60 compared to the case in which the output P of the first pump 60 is controlled based on the draft d only.

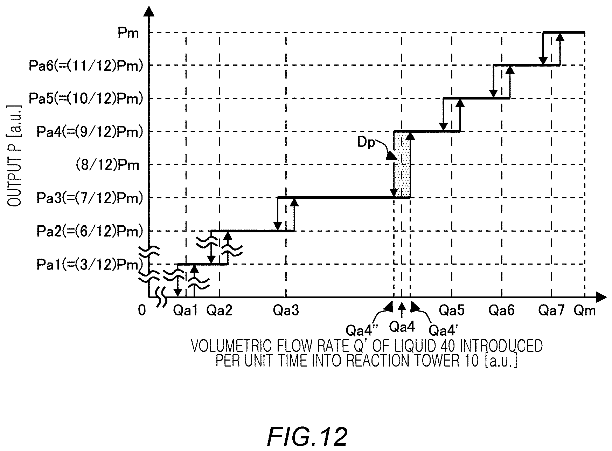

Fig. 12 shows one example of a relationship between an output P of the first pump 60 and a volumetric flow rate Q' of the liquid 40 introduced per unit time into the reaction tower 10. The controlling unit 74 may stepwisely control the output P of the first pump 60. That the controlling unit 74 stepwisely controls the output P of the first pump 60 means that the controlling unit 74 controls a magnitude of the output P of the first pump 60 to have any one of a plurality of predetermined constant values. That is, in the present example, the controlling unit 74 does not serially control the magnitude of the output P of the first pump 60. The controlling unit 74 may stepwisely control the output P of the first pump 60 by stepwisely controlling the frequency f of the electric motor configured to drive the first pump 60.

The maximum output of the first pump 60 is referred to as an output Pm. In the present example, the controlling unit 74 controls the output P of the first pump 60 with 7 steps of output Pa1 - output Pa6 and the output Pm. In the present example, the output P1 - the output P6 are (3/12)Pm, (6/12)Pm, (7/12)Pm, (9/12)Pm, (10/12)Pm and (11/12)Pm, respectively. In the present example, in the case in which the output P of the first pump 60 is the output Pa1 - the output Pa6 and the output Pm, the volumetric flow rate Q' of the liquid 40 introduced per unit time into the reaction tower 10 is controlled to fall within in a range between Qa1 and Qa2, between Qa2 and Qa3, between Qa3 and Qa4, between Qa4 and Qa5, between Qa5 and Qa6, between Qa6 and Qa7, and between Qa7 and Qm, respectively.

The volumetric flow rate controlling unit 70 (see Fig. 2A) may control the volumetric flow rate of the liquid 40 outputted by the first pump 60. In the present example, the volumetric flow rate controlling unit 70 controls, by the valve 72 (see Fig. 2A), the volumetric flow rate of the liquid 40 supplied into the liquid introduction tube 24 by the first pump 60. The volumetric flow rate may be an amount of the liquid 40 per unit time flowing within the liquid introduction tube 24.

In the present example, the output P of the first pump 60 is controlled to be any one of the output Pa1 - the output Pm by the controlling unit 74. The volumetric flow rate controlling unit 70 may control the volumetric flow rate of the liquid 40 supplied by the first pump 60. For example, when the output P of the first pump 60 is controlled to be the output Pa1, the volumetric flow rate controlling unit 70 may control the volumetric flow rate of the liquid 40 supplied by the first pump 60 to fall within a range between the volumetric flow rate Qa1 and the volumetric flow rate Qa.

In the payload mass permitted to be loaded on the ship 200 has an upper limit. The loading capacity of the ship 200 also has an upper limit. Therefore, the magnitude and the mass of the electric motor M configured to drive the first pump 60 are preferred to be small. The output of the electric motor M may be controlled by an inverter IV. In addition to the electric motor M, the ship 200 may also have a power supply M' for driving, for example, an air conditioner for air conditioning, boiler or the like loaded thereon. The power supply M' and the inverter IV may generate noise.

Different from the ground, a power supply system inside the ship 200 may be closed. Therefore, other appliances provided inside the ship 200 are likely to be affected by the noise generated by the power supply M' and the inverter IV. When the other appliances are affected by the noise, the other appliances may cause malfunction. When the noise generated in the case in which the power supply M' and the inverter IV operate at a specific frequency affects the operation of the other appliances, the frequency f of the power supply M' and the inverter IV can stepwisely controlled so that the specific frequency does not be used for the power supply M' and the inverter IV.

In the exhaust gas treatment apparatus for ships 100 of the present example, the controlling unit 74 stepwisely controls the magnitude of the output P of the first pump 60. Therefore, in the present example, the electric motor configured to drive the first pump 60 is difficult to be affected by the above-mentioned noise compared to the case in which the controlling unit 74 serially controls the magnitude of the output P of the first pump 60. Therefore, in the present example, the controlling unit 74 is easy to be exactly controlled the magnitude of the output P of the first pump 60 compared to the case in which the magnitude of the output P of the first pump 60 is serially controlled. Also, in the present example, since the volumetric flow rate controlling unit 70 controls, by the valve 72 (see Fig. 2A), the volumetric flow rate of the liquid 40 supplied by the first pump 60 to the liquid introduction tube 24, the volumetric flow rate of the liquid 40 is easy to be exactly controlled compared to the case in which the volumetric flow rate of the liquid 40 of the volumetric flow rate controlling unit 70 is not controlled.

The following will describe a case in which the controlling unit 74 controls the output P of the first pump 60 to be: an output Pi of one step (for example, output Pa3); and an output Pi' of another step which is adjacent to the aforementioned one step (for example output Pa4), wherein the output Pi' of another step is greater than the output Pi of the aforementioned one step. In this case, a case in which the output P of the first pump 60 is controlled from the output Pi (for example, output Pa3) to the output Pi' (for example, output Pa4) is referred to as a positive direction control. In this case, a case in which the output P of the first pump 60 is controlled from the output Pi' (for example, output Pa4) to the output Pi (for example, output Pa3) is referred to as a negative direction control.

The volumetric flow rate controlling unit 70 may control a volumetric flow rate Q' of the liquid 40 in the case in which the output P of the first pump 60 is controlled in a positive direction and a volumetric flow rate Q' of the liquid 40 in the case in which the output P of the first pump 60 is controlled in a negative direction to be different from each other. In the present example, each volumetric flow rate Q' in the case in which the output P is controlled in the positive direction and the negative direction is referred to as a volumetric flow rate Qa 4' and a volumetric flow rate Qa 4", respectively. In the present example, the volumetric flow rate Qa 4' is greater than the volumetric flow rate Qa 4, and the volumetric flow rate Qa 4" is less than the volumetric flow rate Qa 4. In this manner, when the volumetric flow rate Q' is between the volumetric flow rate Qa 4' and the volumetric flow rate Qa 4", the volumetric flow rate Q' may be controlled both of the case in which the output P of the first pump 60 is the output Pa3 and the case in which the output P of the first pump 60 is the output Pa4. A region in which the volumetric flow rate Q' is present between the volumetric flow rate Qa 4' and the volumetric flow rate Qa 4", and in which the output P of the first pump 60 is present between the output Pa3 and the output Pa4 is referred to as an overlapping region Dp. In Fig. 12, the overlapping region Dp is indicated by hatching.

In the present example, since there is the overlapping region Dp in the relationship between the volumetric flow rate Q' of the liquid 40 and the output P of the first pump 60, even if the controlling unit 74 controls the output P of the first pump 60 from the output Pi of one step (for example, output Pa3) to the output Pi' of another step which is adjacent to the aforementioned one step (for example, output Pa4), the volumetric flow rate Q' of the liquid 40 is likely to be serially controlled. In the present example, since there is the overlapping region Dp in the relationship between the volumetric flow rate Q' of the liquid 40 and the output P of the first pump 60, in a volumetric flow rate Q'-axis shown in Fig. 12, a range in which the volumetric flow rate Q' is not controlled is difficult to be generated.

The exhaust gas treatment apparatus for ships 100 may not include the volumetric flow rate controlling unit 70. When the exhaust gas treatment apparatus for ships 100 does not include the volumetric flow rate controlling unit 70, the controlling unit 74 may control the volumetric flow rate of the liquid 40 outputted by the first pump 60. When the exhaust gas treatment apparatus for ships 100 does not include the volumetric flow rate controlling unit 70, the controlling unit 74 may control, by the valve 72 (see Fig. 2A), the volumetric flow rate of the liquid 40 per unit time supplied into the liquid introduction tube 24 by the first pump 60.

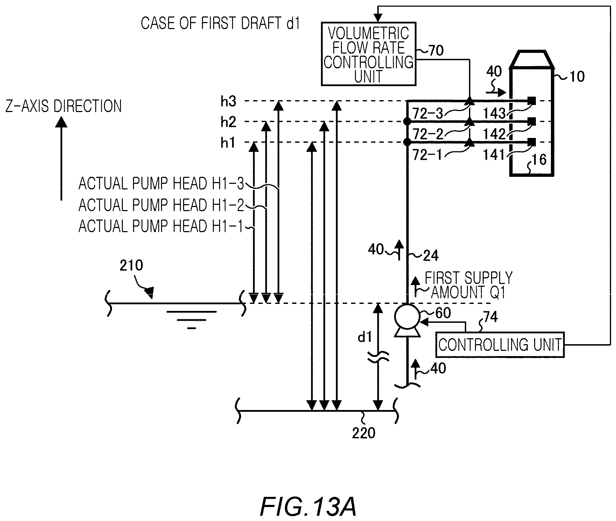

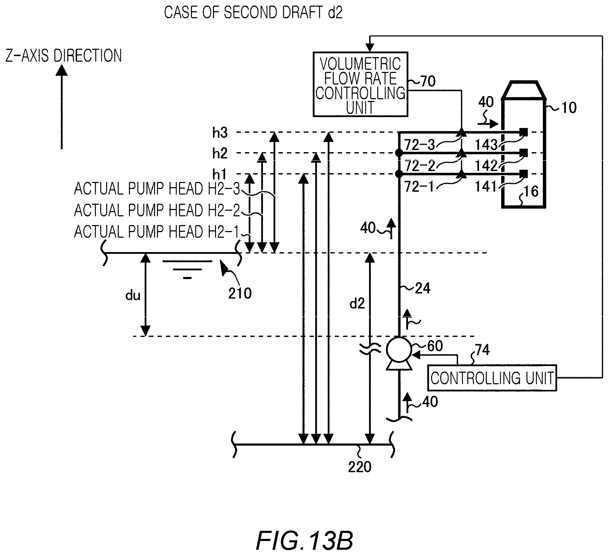

Fig. 13A and Fig. 13B show another figure in one example of the exhaust gas treatment apparatus for ships 100 shown in Fig. 2A. Fig. 13A indicates an addition of an ejecting unit 141 - an ejecting unit 143 to Fig. 3, and Fig. 13B indicates an addition of an ejecting unit 141 - an ejecting unit 143 to Fig. 4, respectively. Fig. 13A indicates a case in which the draft d of the ship 200 is the first draft d1 is shown. Fig. 13B indicates a case in which the draft d of the ship 200 is the second draft d2 is shown.

In Fig. 13A and Fig. 13B, the ejecting unit 141 - the ejecting unit 143 are ejecting units 14 respectively having heights from the ship bottom 220 in the vertical direction (in the present example, Z-axis direction) of height h1, height h2, and height h3. The ejecting unit 141 may be any one of the ejecting unit 14-1 - the ejecting unit 14-4 shown in Fig. 2A. The ejecting unit 142 may be any one of the ejecting unit 14-5 - the ejecting unit 14-7 shown in Fig. 2A. The ejecting unit 143 may be any one of the ejecting unit 14-8 - the ejecting unit 14-12 shown in Fig. 2A. In the present example, a location in the vertical direction of one ejecting unit 14 (for example, an ejecting unit 141) and a location in the vertical direction of another ejecting unit 14 (for example, ejecting unit 142) are different from each other.

In the case in which the draft d of the ship 200 is the first draft d1 (in the case of Fig. 13A), pump heads H of the first pump 60 in the case in which the height from the ship bottom 220 is the height h1 - height h3 are referred to as a pump head H 1-1 - a pump head H 1-3, respectively. In the case in which the draft d of the ship 200 is the second draft d2 (in the case of Fig. 13B), pump heads H of the first pump 60 in the case in which the height from the ship bottom 220 is the height h1 - height h3 are referred to as a pump head H 2-1 - a pump head H 2-3, respectively.

The controlling unit 74 may control an amount of the liquid 40 ejected by one ejecting unit 14 (for example, ejecting unit 141) and an amount of the liquid 40 ejected by another ejecting unit 14 (for example, ejecting unit 142) based on the draft d of the ship 200. In the present example, the controlling unit 74 controls the amount of the liquid 40 ejected by one ejecting unit 14 and the amount of the liquid 40 ejected by another ejecting unit 14 by controlling the volumetric flow rate controlling unit 70 based on the draft d. The volumetric flow rate controlling unit 70 may control, based on the draft d, the amount of the liquid 40 ejected by one ejecting unit 14 and the amount of the liquid 40 ejected by another ejecting unit 14 by controlling the opening degree of the valve 72. The controlling unit 74 may respectively and independently control the amount of the liquid 40 ejected per unit time by one ejecting unit 14 and the amount of the liquid 40 ejected per unit time by another ejecting unit 14.

A pump head H of the liquid 40 discharged by the first pump 60 increases as the draft d of the ship 200 decreases. In the present example, since the first draft d1 is lower than the second draft d2, the actual pump head H1-1 is higher than the actual pump head H2-1, the actual pump head H1-2 is higher than the actual pump head H2-2, and the actual pump head H1-3 is higher than the actual pump head H2-3.

An amount of the liquid 40 flowing per unit time within the liquid introduction tube 24 is referred to as a volumetric flow rate Qet. The amounts of liquid 40 ejected per unit time by the ejecting unit 141 - the ejecting unit 143 are referred to as an ejecting amount Qe1 - an ejecting amount Qe3, respectively. A total of the ejecting amount Qe1 - the ejecting amount Qe3 may be equal to the volumetric flow rate Qet.

The controlling unit 74 may control percentages of the ejecting amount Qe1 - the ejecting amount Qe3. The controlling unit 74 may control the percentages of the ejecting amount Qe1 - the ejecting amount Qe3 based on the draft d of the ship 200. Percentages of the ejecting amount Qe1 - the ejecting amount Qe3 in the case in which the draft d is the first draft d1 is referred to as a first percentage Pc1. Percentages of the ejecting amount Qe1 - the ejecting amount Qe3 in the case in which the draft d is the second draft d2 is referred to as a second percentage Pc2.

The controlling unit 74 may control the ejecting amount Qe1 - the ejecting amount Qe3 so that the first percentage Pc1 and the second percentage Pc2 are different from each other. The controlling unit 74 may increase a percentage of Qe1 occupying the volumetric flow rate Qet in the first percentage Pc1 to be more than a percentage of Qe1 occupying the volumetric flow rate Qet in the second percentage Pc2.

In the present example, since the first draft d1 is lower than the second draft d2, the percentage of the amount of the liquid 40 ejected from the ejecting unit 14 (in the present example, the ejecting unit 141) located below in the vertical direction is increased in the case in which the draft d is the first draft d1, compared to the case in which the draft d is the second draft d2. In this manner, the output P of the first pump 60 is likely to be reduced. In this manner, the power consumption of the first pump 60 is likely to be suppressed.

In the present example, the controlling unit 74 may not control the output P of the first pump 60. In the present example, the output P of the first pump 60 may be a predetermined constant value. When the output P of the first pump 60 is the predetermined constant value, the amount of the liquid 40 per unit time supplied from the first pump 60 may be a predetermined constant amount. The amount of the liquid 40 ejected from the ejecting unit 141 - the ejecting unit 143 may be controlled by the controlling unit 74. The amount of the liquid 40 ejected from the ejecting unit 141 - the ejecting unit 143 may be controlled by the volumetric flow rate controlling unit 70.

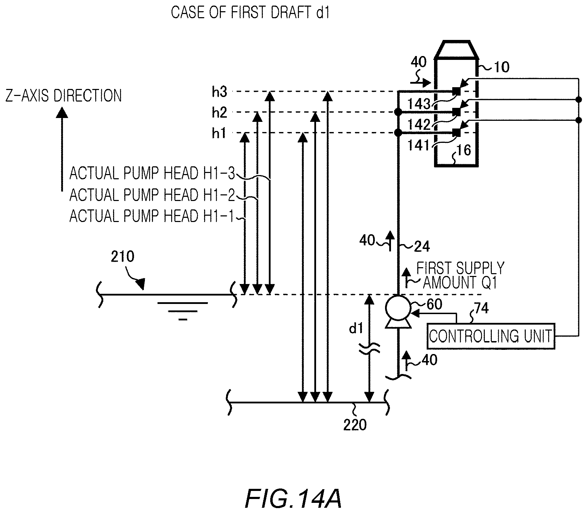

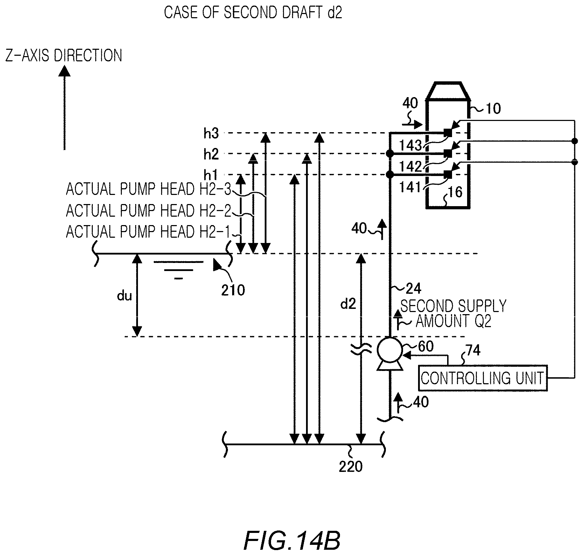

Fig. 14A and Fig. 14B show another figure in one example of the exhaust gas treatment apparatus for ships 100 shown in Fig. 2B. Fig. 14A indicates an addition of an ejecting unit 141 - an ejecting unit 143 to Fig. 3, and Fig. 14B indicates an addition of an ejecting unit 141 - an ejecting unit 143 to Fig. 4, respectively. Fig. 14A indicates a case in which the draft d of the ship 200 is the first draft d1 is shown. Fig. 14B indicates a case in which the draft d of the ship 200 is the second draft d2 is shown. The exhaust gas treatment apparatus for ships 100 shown in Fig. 14A and Fig. 14B is different from the one in Fig. 13A and Fig. 13B in that it does not include a volumetric flow rate controlling unit 70 and a valve 72.

In the present example, the controlling unit 74 is configured to control the amount of the liquid 40 ejected by the ejecting unit 14 by controlling the opening degree of the opening plane of the ejecting unit 14. In the present example, the controlling unit 74 controls the amount of the liquid 40 ejected by one ejecting unit 14 and the amount of the liquid 40 ejected by another ejecting unit 14 by controlling the opening degree of the opening plane based on the draft d. The controlling unit 74 may control percentages of the ejecting amount Qe1 - the ejecting amount Qe3 by controlling the opening degree of the opening plane. The controlling unit 74 may control the ejecting amount Qe1 - the ejecting amount Qe3 so that the first percentage Pc1 and the second percentage Pc2 are different from each other by controlling the opening degree of the opening plane.

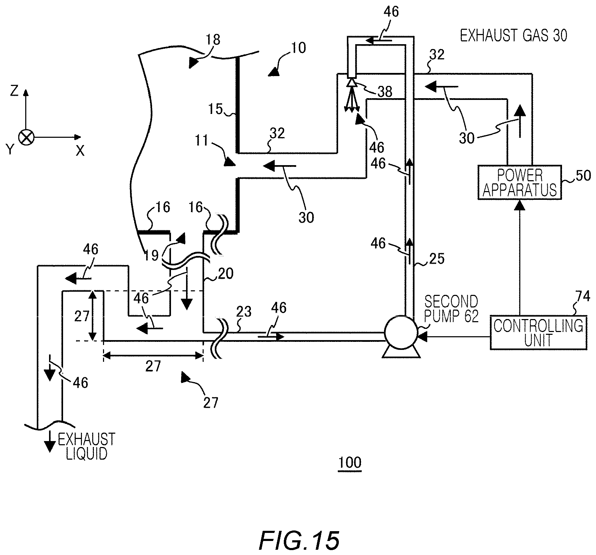

Fig. 15 shows another example of the exhaust gas treatment apparatus for ships 100 according to one embodiment of the present invention. In Fig. 15, there is shown one example of a detail of the exhaust gas introduction tube 32 in the exhaust gas treatment apparatus for ships 100 shown in Fig. 2A and Fig. 2B. In Fig. 15, a part of the reaction tower 10 including the exhaust gas inlet 11 and the liquid outlet 19; the exhaust gas introduction tube 32; and the drain tube 20 are shown. In Fig. 15, the first pump 60, the draft acquiring unit 76 and the volumetric flow rate controlling unit 70 are omitted.

The exhaust gas treatment apparatus for ships 100 of the present example further includes a recovery tube 23, an introduction tube 25, a spray unit 38 and a second pump 62. In the present example, one end and the other end of the recovery tube 23 are respectively connected to the drain tube 20 and the second pump 62. The recovery tube 23 is configured to recover a part of the exhaust liquid 46 discharged into the drain tube 20. A portion of the exhaust liquid 46 discharged from the reaction tower 10 is introduced into the second pump 62 after passing through the recovery tube 23. The other portion of the exhaust liquid 46 discharged into the drain tube 20 may be discharged to the outside of the exhaust gas treatment apparatus for ships 100.

One end and the other end of the introduction tube 25 are respectively connected to the second pump 62 and the spray unit 38. The second pump 62 is configured to supply the exhaust liquid 46 to the spray unit 38. The exhaust liquid 46 supplied by the second pump 62 is introduced into the spray unit 38 after passing through the introduction tube 25.

The spray unit 38 is configured to spray the exhaust liquid 46 to the exhaust gas 30 introduced into the reaction tower 10. The sulfur oxide (SOₓ) included in the exhaust gas 30 is chemically absorbed by the liquid 40 inside the reaction tower 10. Being chemically absorbed means a chemical reaction in which the sulfurous acid gas (SO₂) is caused to be the bisulfite ion (HSO₃⁻) as shown in the above-mentioned chemical formula 1. In this manner, the harmful substances such as sulfur oxide (SOₓ) contained in the exhaust gas 30 are removed. The bisulfite ion (HSO₃⁻) is contained in the exhaust liquid 46 after the chemical reaction shown in the chemical formula 1.

The spray unit 38 may spray the exhaust liquid 46 to the exhaust gas 30 before the chemical absorption by the liquid 40. In the present example, the spray unit 38 is configured to spray the exhaust liquid 46 to the exhaust gas 30 before being introduced into the reaction tower 10. In the present example, the spray unit 38 is configured to spray the exhaust liquid 46 to the exhaust gas 30 passing through the exhaust gas introduction tube 32. The spray unit 38 may also be configured to spray the exhaust liquid 46 in a traveling direction of the exhaust gas 30 in the exhaust gas introduction tube 32. In this manner, the exhaust liquid 46 sprayed from the spray unit 38 is difficult to flow back from the reaction tower 10 to the power apparatus 50. In the present example, the spray unit 38 is configured to spray the exhaust liquid 46 from above to below in the vertical direction (Z-axis direction).

By spraying the exhaust liquid 46 to the exhaust gas 30, at least a part of sulfur oxide (SOₓ) contained in the exhaust gas 30 is physically absorbed into the exhaust liquid 46. Being physically absorbed means a reaction in which the sulfur oxide (SOₓ) is removed by dissolving the sulfur oxide (SOₓ) into the liquid while maintaining the form of the sulfur oxide (SOₓ). In the present example, the spray unit 38 sprays the exhaust liquid 46 to the exhaust gas 30, so that at least a part of the sulfur oxide (SOₓ) contained in the exhaust gas 30 is removed.

By spraying the exhaust liquid 46 to the exhaust gas 30 before being introduced into the reaction tower 10, the exhaust gas treatment apparatus for ships 100 can remove at least a part of the sulfur oxide (SOₓ) contained in the exhaust gas 30. In this manner, the exhaust gas treatment apparatus for ships 100 can reduce the amount of the sulfur oxide (SOₓ) which is chemically absorbed by the liquid 40 inside the reaction tower 10.

When the amount of the sulfur oxide (SOₓ) contained in the exhaust gas 30 which is introduced into the reaction tower 10 is reduced, the chemical equivalent of the liquid 40 required to neutralize the amount of the sulfur oxide (SOₓ) is reduced. Therefore, the exhaust gas treatment apparatus for ships 100 can reduce the amount of the liquid 40 per unit time supplied into the reaction tower 10. In this manner, the first pump 60 is likely to be miniaturized. In this manner, when the exhaust gas treatment apparatus for ships 100 is installed on the ship 200, the exhaust gas treatment apparatus for ships 100 can improve degrees of freedom of the installation of the first pump 60 on the ship 200.

The controlling unit 74 may control the output of the second pump 62. The controlling unit 74 may control the output of the second pump 62 based on the draft d of the ship 200 acquired by the draft acquiring unit 76 (see Fig. 2A and Fig. 2B). An output of the second pump 62 in the case in which the draft d is the first draft d1 (see Fig. 3 and Fig. 4) is referred to as a third output P3. An output P' of the second pump 62 in the case in which the draft d is the second draft d2 (see Fig. 3 and Fig. 4) is referred to as a fourth output P4. When the first draft d1 is higher than the second draft d2, the controlling unit 74 may control the third output P3 of the second pump 62 to be greater than the fourth output P4.

When the output P' of the second pump 62 is the third output P3 and the fourth output P4, a supply amount of the exhaust liquid 46 per unit time supplied from the second pump 62 is referred to as a third supply amount Q3 and a fourth supply amount Q4, respectively. When the controlling unit 74 controlled the third output P3 of the second pump 62 to be greater than the fourth output P4, the third supply amount Q3 is likely to be greater than the fourth supply amount Q4.

As shown in Fig. 11, when the first draft d1 is higher than the second draft d2, the first output P1 of the first pump 60 is likely to be higher than the second output P2. An amount of the sulfur oxide (SOₓ) per unit time physically absorbed to the exhaust liquid 46 in the case of the third supply amount Q3 is likely to be greater than an amount of the sulfur oxide (SOₓ) per unit time physically absorbed to the exhaust liquid 46 in the case of the third supply amount Q3. Therefore, when the first draft d1 is higher than the second draft d2, by controlling the third output P3 of the second pump 62 to be greater than the fourth output P4, the amount of the sulfur oxide (SOₓ) which is chemically absorbed is likely to be reduced, compared to the case in which the third output P3 is not controlled to be greater than the fourth output P4. Therefore, the first pump 60 is likely to be miniaturized by controlling the third output P3 of the second pump 62 to be greater than the fourth output P4.

The drain tube 20 may include a retaining unit 27. The retaining unit 27 retains the exhaust liquid 46 discharged into the drain tube 20. In Fig. 15, a range of the retaining unit 27 in the X-axis direction and the Z-axis direction is indicated by a double-headed arrow. The recovery tube 23 may be connected to the retaining unit 27. The recovery tube 23 may extend in the horizontal direction. In the vertical direction, a location of a bottom surface contacting the exhaust liquid 46 inside the retaining unit 27 and a location on the bottom surface contacting the exhaust liquid 46 inside the recovery tube 23 may be the same.

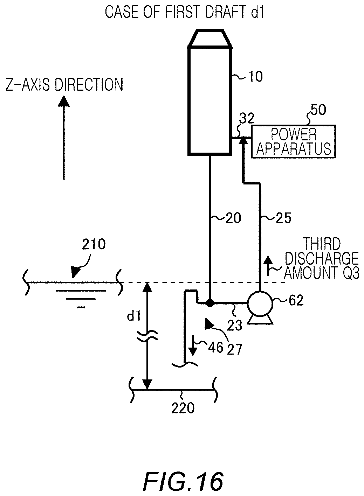

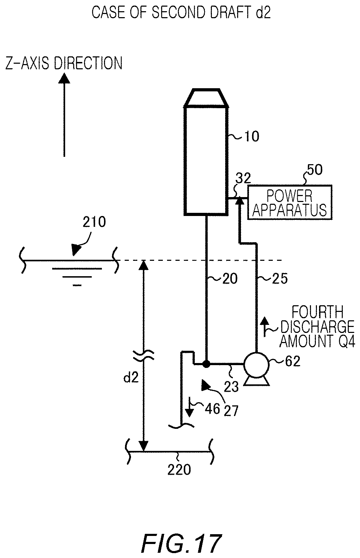

Fig. 16 shows a positional relationship between a draft d and a second pump 62 in the case in which the draft d of the ship 200 in the exhaust gas treatment apparatus for ships 100 shown in Fig. 15 is a first draft d1. Fig. 17 shows a positional relationship between a draft d and a second pump 62 in the case in which the draft d of the ship 200 in the exhaust gas treatment apparatus for ships 100 shown in Fig. 15 is a second draft d2. However, in Fig. 16 and Fig. 17, the controlling unit 74 and the spray unit 38 shown in Fig. 15 are omitted.

In the vertical direction, the lowest draft and the highest draft of the ship 200 are referred to as a lowest draft and a highest draft, respectively. In the present example, the first draft d1 is referred to as the lowest draft, and the second draft d2 is referred to as the highest draft. The second pump 62 may be provided between the first draft d1 and the second draft d2 in the vertical direction. The retaining unit 27 and the recovery tube 23 may be provided between the first draft d1 and the second draft d2 in the vertical direction.

The exhaust liquid 46 discharged into the drain tube 20 is likely to be retained, in the vertical direction, inside the drain tube 20 up to the same location as the water surface 210. Therefore, when the second pump 62 is provided between the first draft d1 and the second draft d2 in the vertical direction, the second pump 62 can supply, to the spray unit 38, the exhaust liquid 46 retaining inside the drain tube 20.

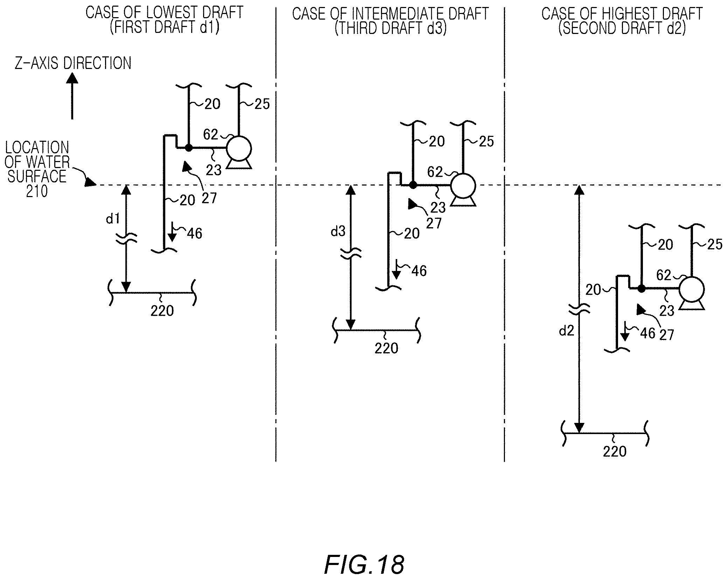

Fig. 18 shows a relationship between a location of a second pump 62 in the vertical direction and a draft d. In Fig. 18, the reaction tower 10, the power apparatus 50, and the exhaust gas introduction tube 32 shown in Fig. 16 and Fig. 17 are omitted. In Fig. 18, the locations of the second pump 62 in the cases of the lowest draft (the first draft d1), the highest draft (the second draft d2) and an intermediate draft are schematically shown. The intermediate draft refers to the draft d between the highest draft and the lowest draft in the vertical direction. In the present example, the intermediate draft is referred to as a third draft d3.

In the present example, in the vertical direction, the second pump 62 is provided above the location of the water surface 210 on the lowest draft (the first draft d1), and provided below the location of the water surface 210 on the highest draft (second draft d2). In the present example, the second pump 62 is located at the location of the water surface 210 in the vertical direction in the case of the third draft d3.

In the vertical direction, when a location of the second pump 62 is the same as the location of the water surface 210 in the ship 200 or lower than the location of the water surface 210, controlling unit 74 may control the output P' of the second pump 62. In the present example, when the draft d is equal to or higher than the third draft d3 and equal to or less than the second draft d2, the controlling unit 74 may control the output P' of the second pump 62.

In the vertical direction, when the location of the second pump 62 is higher than the location of the water surface 210 in the ship 200, the second pump 62 may supply the exhaust liquid 46 retained in the retaining unit 27 to the spray unit 38 (see Fig. 15). The controlling unit 74 may control the second pump 62. In the present example, when the draft d is equal to or higher than the first draft d1 and less than the third draft d3, the second pump 62 may supply, to the spray unit 38 (see Fig. 15), the exhaust liquid 46 retained in the retaining unit 27.

The exhaust liquid 46 discharged into the drain tube 20 is likely to be retained, in the vertical direction, inside the drain tube 20 up to the same location as the water surface 210. Therefore, when the draft d is higher than the third draft d3, the location of the second pump 62 in the vertical direction is likely to be lower than the location of the water surface 210. Therefore, when the draft d is the third draft d3 or higher than the third draft d3, the exhaust liquid 46 is likely to be supplied to the second pump 62.

When the draft d is the third draft d3 or higher than the third draft d3, the second pump 62 may supply, to the spray unit 38 (see Fig. 15), the exhaust liquid 46 retained in the retaining unit 27. When the draft d is the third draft d3, a location of the recovery tube 23 in the vertical direction may be the same as the location of the water surface 210. The location of the recovery tube 23 in the vertical direction may refer to a location on a lower end inside the recovery tube 23 in which the exhaust liquid 46 is passing through.

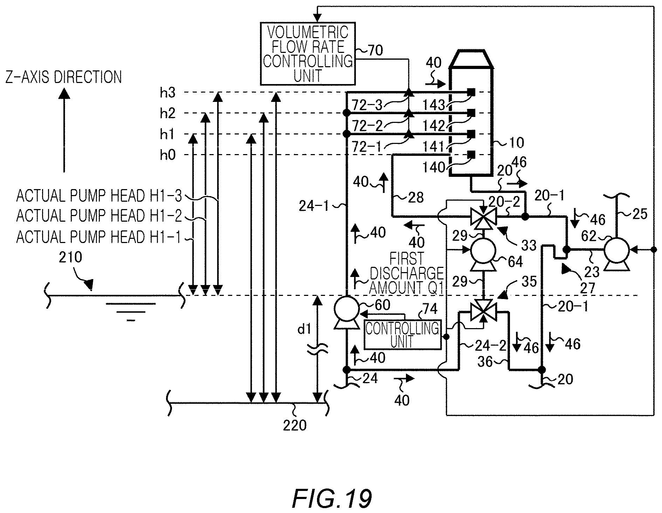

Fig. 19 shows another example of the exhaust gas treatment apparatus for ships 100 according to one embodiment of the present invention. The exhaust gas treatment apparatus for ships 100 of the present example is different from the exhaust gas treatment apparatus for ships 100 shown in Fig. 13A in that it further includes a third pump 64, an ejecting unit 140 and a second pump 62. The exhaust gas treatment apparatus for ships 100 of the present example further includes an introduction tube 28, a tube 29 and a tube 36, and a switching unit 33 and a switching unit 35. The switching unit 33 and the switching unit 35 are three-way valves, for example.

One end and the other end of the introduction tube 25 are respectively connected to the second pump 62 and the spray unit 38, similar to the example shown in Fig. 15 - Fig. 17. The second pump 62 is configured to supply the exhaust liquid 46 to the spray unit 38.

In the present example, the drain tube 20 branches into two drain tubes 20 (a drain tube 20-1 and a drain tube 20-2) on the upstream of the switching unit 33 and the second pump 62 in the flow channel of the exhaust liquid 46. In the present example, the drain tube 20 is connected to the reaction tower 10, the drain tube 20-2 is connected to the switching unit 33, and the drain tube 20-1 is connected to the recovery tube 23. In the present example, one end and the other end of the introduction tube 28 are respectively connected to the switching unit 33 and the reaction tower 10.

In the present example, the liquid introduction tube 24 branches into two liquid introduction tubes 24 (a liquid introduction tube 24-1 and a liquid introduction tube 24-2) on the upstream of the switching unit 35 and the first pump 60 in the flow channel of the liquid 40. In the present example, the liquid introduction tube 24-1 is connected to the reaction tower 10 and the liquid introduction tube 24-2 is connected to the switching unit 35. In the present example, one end and the other end of the tube 36 are respectively connected to the switching unit 35 and the drain tube 20-1.

In the present example, one end and the other end of the tube 29 are respectively connected to the switching unit 33 and the switching unit 35. In the present example, the third pump 64 is provided to the tube 29. In the present example, the first pump 60 is provided to the liquid introduction tube 24-1. As described below, the liquid 40 or the exhaust liquid 46 flows within the tube 29.

In the present example, the third pump 64 causes the liquid 40 to be introduced into the reaction tower 10 or causes the exhaust liquid 46 to be discharged from the reaction tower 10. In the present example, the controlling unit 74 controls whether to introduce the liquid 40 into the reaction tower 10 by the third pump 64, or to discharge the exhaust liquid 46 from the reaction tower 10.

In the present example, the controlling unit 74 controls, by controlling the switching unit 33, whether to cause the liquid 40 to flow within the tube 29 to flow into the introduction tube 28, or cause the exhaust liquid 46 to flow within the drain tube 20-2 to flow into the tube 29. In the present example, the controlling unit 74 controls, by controlling the switching unit 35, whether to cause the liquid 40 to flow within the liquid introduction tube 24-2 to flow into the tube 29, or cause the exhaust liquid 46 to flow within the tube 29 to flow into the tube 36.

Herein, a case in which the switching unit 35 is controlled to cause the liquid 40 to flow within the liquid introduction tube 24-2 to flow into the tube 29 and the switching unit 35 is controlled to cause the liquid 40 to flow within the tube 29 to flow into the introduction tube 28 is referred to as an introduction manner. Herein, a case in which the switching unit 33 is controlled to cause the exhaust liquid 46 to flow within the drain tube 20-2 to flow into the tube 29 and the switching unit 35 is controlled to cause the exhaust liquid 46 to flow within the tube 29 to flow into the tube 36 is referred to as a discharging manner.

The controlling unit 74 may control the output P" of the third pump 64. When the switching unit 33 and the switching unit 35 are controlled in the introduction manner, the controlling unit 74 may control the amount of the liquid 40 per unit time supplied from the third pump 64, by controlling the output P" of the third pump 64. The liquid 40 may be ejected into the reaction tower 10 from the ejecting unit 140 after passing through the introduction tube 28.

When the switching unit 33 and the switching unit 35 are controlled in the discharging manner, the controlling unit 74 may control the amount of the exhaust liquid 46 per unit time supplied from the third pump 64, by controlling the output P" of the third pump 64. The exhaust liquid 46 may be discharged from the drain tube 20 after passing through the tube 36.

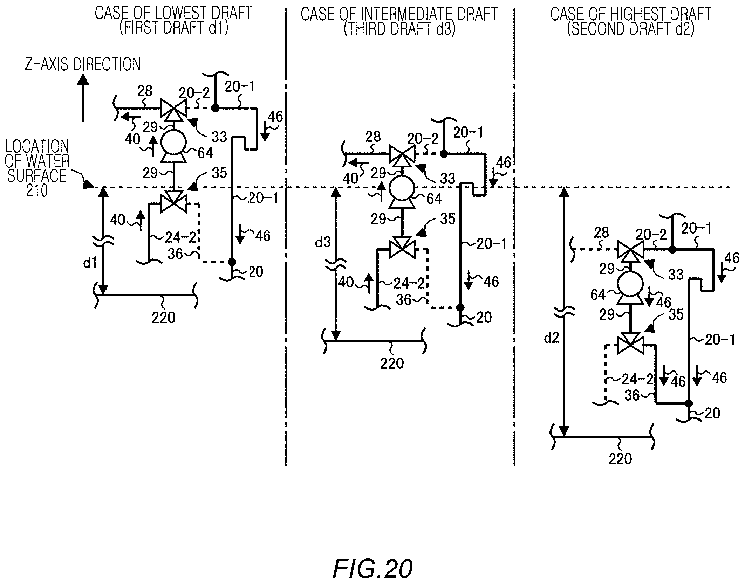

Fig. 20 shows a relationship between a location of a third pump 64 in the vertical direction and a draft d. In Fig. 20, the reaction tower 10, the controlling unit 74, the first pump 60, the liquid introduction tube 24-1, the second pump 62, the recovery tube 23 and the introduction tube 25 shown in Fig. 19 are omitted. In Fig. 20, the locations of the third pump 64 in the cases of the first draft d1 (for example, the lowest draft), the second draft d2 (for example, the highest draft) and the third draft d3 (the intermediate draft) are schematically shown.

The controlling unit 74 may control whether to control the switching unit 33 and the switching unit 35 in the introduction manner or in the discharging manner, based on the draft d of the ship 200. In the present example, the third pump 64 is located above the water surface 210 in the vertical direction when the draft d is the first draft d1, and is located below the water surface 210 in the vertical direction when the draft d is the second draft d2. In the present example, the third pump 64 is located at the location of the water surface 210 in the vertical direction in the case in which the draft d is the third draft d3.

In the vertical direction, when the location of the third pump 64 is lower than the location of the water surface 210 (in the case of the second draft d2), the controlling unit 74 may cause the third pump 64 to discharge the exhaust liquid 46 from the reaction tower 10. When the draft d is the second draft d2, the exhaust liquid 46 is difficult to flow within the drain tube 20-1 since the exhaust liquid 46 is likely to be located below the water surface 210 in the vertical direction. Therefore, in the present example, when the draft d is the second draft d2, the controlling unit 74 controls the switching unit 33 and the switching unit 35 in the discharging manner. By controlling the switching unit 33 and the switching unit 35 in the discharging manner, the third pump 64 outputs the exhaust liquid 46 in a direction from the upstream to the downstream in the flow channel of the exhaust liquid 46. That is, in the case of the discharging manner, the third pump 64 of the present example functions as a discharge pump.

When the draft d is the second draft d2, the liquid 40 is likely to be located below the water surface 210 in the vertical direction, compared to the case in which the draft d is the first draft d1 or the third draft d3. Therefore, the pump head H of the first pump 60 (see Fig. 19) is likely to be reduced, compared to the case in which the draft d is the first draft d1 or the third draft d3. Therefore, when the draft d is the second draft d2, the liquid 40 may be supplied into the reaction tower 10 (see Fig. 19) by the first pump 60, or may not be supplied into the reaction tower 10 (see Fig. 19) by the third pump 64.

In the vertical direction, when the location of the third pump 64 is the same as the location of the water surface 210 (for example, in the case of the third draft d3) or higher than the location of the water surface 210 (for example, in the case of the first draft d1), the controlling unit 74 may cause the third pump 64 to introduce the liquid 40 into the reaction tower 10. When the draft d is the first draft d1 or the third draft, the liquid 40 is difficult to flow within the introduction tube 28 since the liquid 40 is likely to be located above the water surface 210 in the vertical direction. Therefore, in the present example, when the draft d is the first draft d1 or the third draft, the controlling unit 74 controls the switching unit 33 and the switching unit 35 in the introduction manner. By controlling the switching unit 33 and the switching unit 35 in the introduction manner, the third pump 64 outputs the liquid 40 in a direction from the upstream to the downstream in the flow channel of the liquid 40. That is, in the case of the introduction manner, the third pump 64 of the present example functions as an introducing pump.

When the draft d is the first draft d1 or the third draft d3, the exhaust liquid 46 is likely to be located above the water surface 210 in the vertical direction, compared to the case in which the draft d is the second draft d2. Therefore, when the draft d is the first draft d1 or the third draft d3, the exhaust liquid 46 is likely to flow within the drain tube 20-1 compared to the case in which the draft d is the second draft d2. Therefore, when the draft d is the first draft d1 or the third draft d3, the exhaust liquid 46 may not be discharged by the third pump 64.

The controlling unit 74 may control the output P" of the third pump 64 based on the draft d of the ship 200. When the draft d is the second draft d2, by controlling the output P" of the third pump 64, the controlling unit 74 may control the amount of the exhaust liquid 46 per unit time supplied by the third pump 64. When the draft d is the first draft d1 or the third draft d3, by controlling the output P" of the third pump 64, the controlling unit 74 may control the amount of the liquid 40 per unit time supplied by the third pump 64.

In the vertical direction, the location of the third pump 64 may be the same as or may be different from the location of the second pump 62 (see Fig. 19). In the vertical direction, when the second pump 62 is located below the third pump 64 and the second pump 62 is located below the water surface 210, the exhaust gas treatment apparatus for ships 100 is likely to supply the exhaust liquid 46 to the spray unit 38 (see Fig. 15) by the second pump 62, while supplying the liquid 40 to the reaction tower by the third pump 64.

While the embodiments of the present invention have been described, the technical scope of the invention is not limited to the above-described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### (Item 1)

An exhaust gas treatment apparatus for ships further comprising a concentration measurement unit configured to measure at least one of a concentration of the sulfur dioxide and a concentration of the carbon dioxide, wherein
the concentration measurement unit is configured to measure at least one of the concentration of the sulfur dioxide and the concentration of the carbon dioxide of the exhaust gas, and
the controlling unit is configured to control an output of the first pump based on the draft of the ship and at least one of the concentration of the sulfur dioxide and the concentration of the carbon dioxide of the exhaust gas.

### (Item 2)

An exhaust gas treatment apparatus for ships further comprising a concentration measurement unit configured to measure at least one of a concentration of the sulfur dioxide and a concentration of the carbon dioxide, wherein
the concentration measurement unit is configured to measure at least one of the concentration of the sulfur dioxide and the concentration of the carbon dioxide of the purified gas which is generated by treating the exhaust gas by the liquid, and
the controlling unit is configured to control an output of the first pump based on the draft of the ship and at least one of the concentration of the sulfur dioxide and the concentration of the carbon dioxide of the purified gas.

### (Item 3)

The exhaust gas treatment apparatus for ships according to item 2, wherein the concentration measurement unit is further configured to measure at least one of the concentration of the sulfur dioxide and the concentration of the carbon dioxide of the exhaust gas, and
the controlling unit is configured to control the output of the first pump based on at least either of: at least one of the concentration of the sulfur dioxide and the concentration of the carbon dioxide of the exhaust gas; and at least one of the concentration of the sulfur dioxide and the concentration of the carbon dioxide of the purified gas.

### (Item 4)

The controlling unit is configured to control the output of the first pump to be an output of one step and an output of another step which is adjacent to the aforementioned one step and is greater than the output of one step.
the controlling unit is configured to control the output of the first pump in the case in which the output of the first pump is controlled from the aforementioned one step to another step to be greater than the output of the first pump in the case in which the output of the first pump is controlled from another step to the aforementioned one step.

### (Item 5)

The controlling unit is configured to control an output of the second pump based on the draft of the ship.

### EXPLANATION OF REFERENCES

10: reaction tower 11: exhaust gas inlet 12: trunk tube 13: branch tube 14: ejecting unit 15: side wall 16: bottom surface 17:exhaust gas outlet 18: gas treating portion 19: liquid outlet 20: drain tube 23: recovery tube 24: liquid introduction tube 25: introduction tube 26: pressure sensor 27: retaining unit 28: introduction tube 29: tube 30: exhaust gas 31: draft sensor 32: exhaust gas introduction tube 33: switching unit 34: purified gas 35: switching unit 36: tube 38: spray unit 40: liquid 46: exhaust liquid 50: power apparatus 60: first pump 62: second pump 64: third pump 70: volumetric flow rate controlling unit 72: valve 74: controlling unit 76: draft acquiring unit 78: pressure measurement unit 79: concentration measurement unit 100: exhaust gas treatment apparatus for ships 140: ejecting unit 141: ejecting unit 142: ejecting unit 143: ejecting unit 200: ship 210: water surface 220: ship bottom 230: ship hull 300: ocean

## Claims

1. An exhaust gas treatment apparatus for ships comprising:
a reaction tower provided in the ship and to which exhaust gas is introduced;
a first pump configured to introduce, into the reaction tower, liquid for treating the exhaust gas;
a controlling unit configured to control an output of the first pump; and
a draft acquiring unit configured to acquire a draft of the ship, wherein
the controlling unit is configured to control the output of the first pump based on the draft of the ship acquired by the draft acquiring unit.

2. The exhaust gas treatment apparatus for ships according to claim 1, wherein
the draft acquiring unit configured to acquire a first draft of the ship at a first clock time and acquire a second draft of the ship at a second clock time which is later than the first clock time, and
the controlling unit is configured to control the output of the first pump to be a first output when the draft of the ship is the first draft, and control the output of the first pump to be a second output which is different from the first output when the draft of the ship is the second draft.

3. The exhaust gas treatment apparatus for ships according to claim 2, wherein the controlling unit is configured to control the second output to be less than the first output when the second draft is higher than the first draft.

4. The exhaust gas treatment apparatus for ships according to any one of claims 1 to 3, further comprising a pressure measurement unit configured to measure at least one of a suction pressure of the liquid introduced into the first pump and a discharge pressure of the liquid derived from the first pump, wherein
the draft acquiring unit is configured to acquire the draft of the ship based on at least one of the suction pressure and the discharge pressure measured by the pressure measurement unit.

5. The exhaust gas treatment apparatus for ships according to any one of claims 1 to 4, further comprising a draft sensor configured to sense a location of a water surface in the ship, wherein
the draft acquiring unit is configured to acquire the draft of the ship based on the location of the water surface sensed by the draft sensor.

6. The exhaust gas treatment apparatus for ships according to any one of claims 1 to 5, wherein the controlling unit is configured to stepwisely control the output of the first pump.

7. The exhaust gas treatment apparatus for ships according to any one of claims 1 to 6, wherein when the draft of the ship is less than a predetermined draft threshold, the controlling unit is configured to control the output of the first pump to be a predetermined constant output.

8. The exhaust gas treatment apparatus for ships according to any one of claims 1 to 7, wherein
the reaction tower has a plurality of ejecting units configured to eject the liquid,
in a vertical direction, a location of one of the plurality of ejecting units and a location of another one of the plurality of ejecting units is different from each other, and
the controlling unit is configured to control an amount of the liquid ejected by one of the plurality of ejecting units and an amount of the liquid ejected by another one of the plurality of ejecting units based on the draft of the ship.

9. An exhaust gas treatment apparatus for ships comprising:
a reaction tower which is provided in a ship and to which exhaust gas is introduced, the reaction tower having a plurality of ejecting units configured to eject liquid for treating the exhaust gas;
a draft acquiring unit configured to acquire a draft of the ship; and
a controlling unit configured to control an amount of the liquid ejected by the ejecting unit, wherein
in a vertical direction, a location of one of the plurality of ejecting units and a location of another one of the plurality of ejecting units are different from each other, and
the controlling unit is configured to control an amount of the liquid ejected by one of the plurality of ejecting units and an amount of the liquid ejected by another one of the plurality of ejecting units based on the draft of the ship which is acquired by the draft acquiring unit.

10. The exhaust gas treatment apparatus for ships according to any one of claims 1 to 9, further comprising:
a spray unit configured to spray, on exhaust gas introduced into the reaction tower, exhaust liquid generated by treating the exhaust gas; and
a second pump configured to supply the exhaust liquid to the spray unit, wherein
the controlling unit is configured to control an output of the second pump.

11. The exhaust gas treatment apparatus for ships according to claim 10, wherein the second pump is provided, in a vertical direction, between a lowest draft which is the lowest draft of the ship and a highest draft which is the highest draft of the ship.

12. The exhaust gas treatment apparatus for ships according to claim 10 or 11, wherein in a vertical direction, when a location of the second pump is the same as a location of a water surface in the ship or lower than the location of the water surface, the controlling unit is configured to control the output of the second pump.

13. The exhaust gas treatment apparatus for ships according to any one of claims 1 to 12, further comprising a third pump configured to: introduce the liquid into the reaction tower; or cause exhaust liquid to be discharged from the reaction tower, the exhaust liquid being generated by treating the exhaust gas, wherein
the controlling unit is configured to control, based on the draft of the ship, whether to introduce the liquid into the reaction tower by the third pump, or to cause the third pump to discharge the exhaust liquid from the reaction tower.

14. The exhaust gas treatment apparatus for ships according to claim 13, wherein in a vertical direction, the third pump is located above a location of a water surface in the ship in a case of a lowest draft which is the lowest draft of the ship, and located below the location of the water surface in the ship in a case of a highest draft which is the highest draft of the ship.

15. The exhaust gas treatment apparatus for ships according to claim 13 or 14, wherein
in a vertical direction, when a location of the third pump is lower than a location of a water surface in the ship, the controlling unit is configured to cause the third pump to discharge the exhaust liquid to the reaction tower,
in the vertical direction, when the location of the third pump is the same as the location of the water surface in the ship or higher than the location of the water surface, the controlling unit is configured to cause the third pump to introduce the liquid to the reaction tower.

16. The exhaust gas treatment apparatus for ships according to any one of claims 13 to 15, wherein the controlling unit is configured to control an output of the third pump based on the draft of the ship.
